(19) Europäisches Patentamt
European Patent Office
Office européen des brevets

(11) **EP 4 299 313 A1**

(12) **EUROPEAN PATENT APPLICATION**
published in accordance with Art. 153(4) EPC

(43) Date of publication:
**03.01.2024 Bulletin 2024/01**

(21) Application number: **22759619.4**

(22) Date of filing: **22.02.2022**

(51) International Patent Classification (IPC):
***B32B 27/36*** (2006.01)   ***B32B 7/023*** (2019.01)

(52) Cooperative Patent Classification (CPC):
**B32B 7/023; B32B 27/36**

(86) International application number:
**PCT/JP2022/007127**

(87) International publication number:
**WO 2022/181583 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.02.2021 JP 2021027164**

(71) Applicant: **Toray Industries, Inc.**
**Tokyo 103-8666 (JP)**

(72) Inventors:
• **KAWATA, Yuji**
**Anpachi-gun, Gifu 503-2395 (JP)**
• **WAKAHARA, Ryuichi**
**Nagoya-shi, Aichi 455-8502 (JP)**
• **MORISHITA, Kenta**
**Anpachi-gun, Gifu 503-2395 (JP)**

(74) Representative: **Mewburn Ellis LLP**
**Aurora Building**
**Counterslip**
**Bristol BS1 6BX (GB)**

(54) **MOLDING FILM AND MOLDED BODY IN WHICH SAME IS USED**

(57)    An object of the present invention is to provide a molding film having excellent moldability during molding processing, in which the molding film includes a resin layer (X layer) on at least one surface of a polyester film, and the polyester film has a composition in which a layer (A layer) containing a thermoplastic resin A as a main component and a layer (B layer) containing a thermoplastic resin B different from the thermoplastic resin A as a main component are alternately laminated in a thickness direction in a total of 51 or more layers.

Fig.1

**Description**

TECHNICAL FIELD

The present invention relates to a molding film and a molded body using the same.

BACKGROUND ART

In recent years, due to increasing environmental awareness, there is an increased demand for solvent-less coating, a decoration method as an alternative to plating, and the like in the fields of building materials, automotive parts, cellular phones, electric appliances, and the like, and introduction of a decoration method using a film has been more advanced. In addition, metallic tone and high gloss tone can exhibit high designability, which is highly needed. Furthermore, an infrared sensor is often mounted on various devices, and there is also a need for making the sensor invisible from the outside while securing infrared transparency.

As a method for performing metallic tone decoration using a film, a method is known in which a design layer containing aluminum, indium, chromium, or the like as a main component is formed on a film using a vapor deposition method such as a vacuum vapor deposition method, a sputtering method, or an ion blating method, and then the design layer is transferred to an object member (Patent Document 1). Moreover, as another method, a method is known in which a metallic tone appearance is realized by forming an optical interference multilayer film that highly reflects visible light and highly transmits near infrared light on an object member by utilizing an interference phenomenon of light generated by alternately laminating two or more kinds of materials having different refractive indexes with a layer thickness at a wavelength level of light (Patent Document 2). In addition, as a method for improving the moldability of a molding film using a light interference multilayer film, a method of laminating a polycarbonate resin or an acrylic resin on at least one surface of the light interference multilayer film, and a method of controlling the storage elastic modulus and stretching stress of the entire moldable film are known (Patent Document 3).

PRIOR ART DOCUMENTS

PATENT DOCUMENTS

Patent Document 1: Japanese Patent Laid-open Publication No. 2012-201032
Patent Document 2: Japanese Patent Laid-open Publication No. 2019-139228
Patent Document 3: Japanese Patent Laid-open Publication No. 2018-69552

SUMMARY OF THE INVENTION

PROBLEMS TO BE SOLVED BY THE INVENTION

However, in the technique described in Patent Document 1, there have been problems in that cracking of the deposition surface and deterioration of concealment properties are observed due to stretching during molding processing such as insert molding and vacuum pressure molding, and infrared ray transparency is not sufficient. In the technique described in Patent Document 2, there is a problem in that when molding processing is performed, a change in the laminate thickness becomes large in a stretching processing portion, which causes coloring. Further, in the technique described in Patent Document 3, when a wavelength of a sensor to be used is in an infrared region close to visible light, there is a problem in that it is difficult to achieve both sensor transparency and coloring suppression at the time of molding processing.

An object of the present invention is to ameliorate the problems with the conventional technique and to provide a molding film having metallic tone gloss and particularly excellent moldability during molding processing.

SOLUTIONS TO THE PROBLEMS

In order to solve the above-mentioned problems, a molding film of the present invention has the following configurations. That is, the molding film of the present invention is a molding film having a resin layer (X layer) on at least one surface of a polyester film, wherein the polyester film has a composition in which a layer (A layer) containing a thermoplastic resin A as a main component and a layer (B layer) containing a thermoplastic resin B different from the thermoplastic resin A as a main component are alternately laminated in a thickness direction in a total of 51 or more layers.

Further, a preferred embodiment of the molding film of the present invention is a molding film in which the thickness Tx [um] of the X layer, the thickness Tp [um] of the polyester film, the 50% tensile stress Fx [MPa] of the X layer at 150°C, and the 50% tensile stress Fp [MPa] of the polyester film at 150°C satisfy the following formulas (1) and (2) .

$$\text{Formula (1) } Tx \times Fp \leq 11000$$

$$\text{Formula (2) } Tp \times Fx \geq 250$$

EFFECTS OF THE INVENTION

According to the present invention, a molding film having excellent moldability during molding processing can be provided. Further, according to a preferred aspect of the present invention, it is possible to provide a molding film that exhibits a metallic tone while having transparency to a sensor having an infrared wavelength, and that can achieve both improvement in molding followability and suppression of coloring at the time of molding.

BRIEF DESCRIPTION OF THE DRAWINGS

Fig. 1 is a cross-sectional view of a molding film according to an embodiment of the present invention cut along a plane perpendicular to a film surface (one surface of X layer, no adhesive layer).
Fig. 2 is a cross-sectional view of a molding film according to an embodiment of the present invention cut along a plane perpendicular to a film surface (one surface of X layer, with an adhesive layer).
Fig. 3 is a cross-sectional view of a molding film according to an embodiment of the present invention cut along a plane perpendicular to a film surface (both surfaces of X layer, no adhesive layer).
Fig. 4 is a cross-sectional view of a molding film according to an embodiment of the present invention cut along a plane perpendicular to a film surface (both surfaces of X layer, with an adhesive layer).
Fig. 5 is a cross-sectional view of a molding film according to an embodiment of the present invention cut along a plane perpendicular to a film surface (both surfaces of X layer, no adhesive layer on only one surface).

EMBODIMENTS OF THE INVENTION

A molding film of the present invention is a molding film having a resin layer (X layer) on at least one surface of a polyester film, wherein the polyester film has a composition in which a layer (A layer) containing a thermoplastic resin A as a main component and a layer (B layer) containing a thermoplastic resin B different from the thermoplastic resin A as a main component are alternately laminated in a thickness direction in a total of 51 or more layers. Adopting the above aspect provides the molding film with a metallic gloss tone and excellence in moldability during molding processing.

In the molding film of the present invention, the polyester film has a configuration in which a layer (A layer) containing a thermoplastic resin A as a main component and a layer (B layer) containing a thermoplastic resin B different from the thermoplastic resin A as a main component are alternately laminated in a thickness direction in a total of 51 or more layers. The structure is more preferably a structure in which a total of 250 or more layers of A layers and B layers are alternately laminated in the thickness direction, further more preferably a structure in which 400 or more layers are laminated, and particularly preferably a structure in which 800 or more layers are laminated. The upper limit of the number of layers is not particularly limited, but is preferably 2000 layers or less from the viewpoint of productivity and cost. When the number of layers to be laminated is less than 51, visible light cannot be uniformly reflected, and a film with high chroma may be obtained.

Note that here, the polyester film refers to a film containing a polyester resin in an amount of more than 50 mass% and 100 mass% or less based on 100 mass% of all components constituting the film. The polyester resin refers to a resin having a molecular structure in which a dicarboxylic acid unit and a diol unit are connected by an ester bond. The polyester film in the present invention is preferably a biaxially oriented polyester film from the viewpoint of film strength, heat resistance, and versatility. The biaxially oriented polyester film refers to a polyester film having molecular orientation in two orthogonal directions, and is usually obtained by stretching an unstretched polyester sheet in two orthogonal directions.

The polyester film in the molding film of the present invention preferably contains three or more thick film layers having a thickness of 1 um or more and 20 um or less, and the thick film layers are the outermost layers on both sides, from the viewpoint of reducing loss of metallic tone gloss during molding. The thickness of the thick film layer is more preferably 5 um or more and 10 um or less. The thick film layer with a thickness of 1 um or more can reduce occurrence of washout due to resin shearing and distortion of the laminated structure when a resin is injected from the polyester film side in injection molding processing such as insert molding. This reduces loss of gloss in the vicinity of the resin injection portion and occurrence of ring-shaped defects. In addition, it is preferable that the thick film layer is the A layer having a high resin strength from the viewpoint of being able to reduce the shearing of the resin at the time of injection molding.

In the polyester film in the present invention, the number of layers with a layer-pair thickness of 100 nm or more and less than 200 nm is preferably larger than the number of layers with a layer-pair thickness of 200 nm or more and less than 250 nm from the viewpoint of making the reflectance in the wavelength band of 400 to 700 nm more uniform. Here, the "layer-pair thickness" refers to a thickness obtained by adding the layer thicknesses of the adjacent A layer and B layer. In addition, the layer-pair thickness must be obtained by adding the layer thickness of the mth A layer counted from one film surface only for the A layer and the layer thickness of the mth B layer counted from the same surface only for the adjacent B layer. Here, m represents an integer. For example, when layers are arranged in order of A1 layer, B1 layer, A2 layer, B2 layer, A3 layer, B3 layer, and so forth from one film surface to the opposite surface, the A1 layer and the B1 layer are the first layer pair, the A2 layer and the B2 layer are the second layer pair, and the A3 layer and the B3 are the third layer pair.

When the number of layers with a layer-pair thickness of 100 nm or more and less than 200 nm is equal to or smaller than the number of layers with a layer-pair thickness of 200 nm or more and less than 250 nm, the reflectance decreases toward the lower wavelength side in the reflection bandwidth of the wavelength band of 400 nm to 700 nm, so that a reddish appearance may be obtained. This occurs because the density of the layer pair that causes reflection on the low wavelength side is reduced. Therefore, as a layer-pair thickness order of the layers constituting the polyester film, it is preferable that the layer-pair thickness does not monotonically increase or decrease in an arithmetic progression but increases or decreases in a geometric progression while satisfying the above conditions. More preferably, the number of layers with a layer-pair thickness of 100 nm or more and less than 200 nm is 1.05 times or more and 2.50 times or less the number of layers with a layer-pair thickness of 200 nm or more and less than 250 nm.

The thermoplastic resin A and the thermoplastic resin B in the polyester film are preferably polyester resins from the viewpoint of strength, heat resistance, transparency, and versatility. As the polyester resin, a polyester obtained by polymerization from a monomer composed of an aromatic dicarboxylic acid or an aliphatic dicarboxylic acid and a diol as main components is preferable.

Here, examples of the aromatic dicarboxylic acid include terephthalic acid, isophthalic acid, phthalic acid, 1,4-naphthalene dicarboxylic acid, 1,5-naphthalene dicarboxylic acid, 2,6-naphthalene dicarboxylic acid, 4,4'-diphenyl dicarboxylic acid, 4,4'-diphenyl ether dicarboxylic acid, and 4,4'-diphenyl sulfone dicarboxylic acid. Examples of the aliphatic dicarboxylic acid include adipic acid, suberic acid, sebacic acid, dimer acid, dodecanedioic acid, cyclohexanedicarboxylic acid, and ester derivatives thereof. Among them, terephthalic acid and 2,6-naphthalenedicarboxylic acid with a high refractive index are preferable. These acid components may be used alone or in combination of two or more, and may be partially copolymerized with an oxyacid such as hydroxybenzoic acid.

Examples of the diol component include ethylene glycol, 1,2-propanediol, 1,3-propanediol, neopentyl glycol, 1,3-butanediol, 1,4-butanediol, 1,5-pentanediol, 1,6-hexanediol, 1,2-cyclohexanedimethanol, 1,3-cyclohexanedimethanol, 1,4-hexanedimethanol, diethylene glycol, triethylene glycol, polyalkylene glycol, 2,2-bis(4-hydroxyethoxyphenyl)propane, isosorbate, and spiroglycol. Among them, ethylene glycol is preferably used. These diol components may be used alone or in combination of two or more.

Among the polyester resins, polyethylene terephthalate and a copolymer thereof, polyethylene naphthalate and a copolymer thereof, polybutylene terephthalate and a copolymer thereof, polybutylene naphthalate and a copolymer thereof, polyhexamethylene terephthalate and a copolymer thereof, polyhexamethylene naphthalate and a copolymer thereof, and the like are preferably used from the viewpoint of increasing the in-plane average refractive index of the A layer and easily setting the difference from the in-plane average refractive index of the B layer to 0.005 or more, and preferably 0.040 or more.

The combination of the thermoplastic resin A and the thermoplastic resin B is preferably a combination in which the basic skeletons of both thermoplastic resins are common. Here, the "basic skeleton" referred to in the present invention refers to a repeating unit that constitutes a resin and is contained in the largest amount, and for example, in the case of polyethylene terephthalate, ethylene terephthalate is the basic skeleton. Examples of such a combination include an aspect in which one thermoplastic resin is polyethylene terephthalate, the other thermoplastic resin is a polymer (copolymer) composed of an ethylene terephthalate unit and a cyclohexane 1,4-dimethylene terephthalate unit, and the ethylene terephthalate unit is contained in the largest amount. When resins having the same basic skeleton are used, problems such as lamination defects such as flow marks and delamination between layers hardly occur in formation of a multilayer film.

As the thermoplastic resin A, it is preferable to use a crystalline resin from the viewpoint of enhancing the press imprint resistance (dent resistance) and the stiffness of the polyester film itself. As the thermoplastic resin A, polyethylene terephthalate or polyethylene naphthalate is preferably used. On the other hand, the thermoplastic resin B is preferably a non-crystalline resin from the viewpoint of suppressing an increase in refractive index to form a non-crystalline film. As the thermoplastic resin B, it is preferable to use polyethylene terephthalate or a copolymer of polyethylene naphthalate containing isophthalic acid, naphthalenedicarboxylic acid, diphenyl acid, or cyclohexanedicarboxylic acid, or containing spiroglycol, cyclohexanedimethanol, bisphenoxyethanolfluorene, or bisphenol A as a constituent unit.

The molding film of the present invention is excellent in moldability during molding processing, and it is important to have a resin layer (X layer) on at least one side of the polyester film from the viewpoint of protecting the polyester film when injection molding processing is performed. The type of the resin of the X layer is not particularly limited, but it is preferably a thermoplastic resin from the viewpoint of moldability. A more preferred embodiment of the resin of the X layer will be described later.

In the molding film of the present invention, a thickness Tx [um] of the X layer, a thickness Tp [um] of the polyester film, a 50% tensile stress Fx [MPa] of the X layer at 150°C, and a 50% tensile stress Fp [MPa] of the polyester film at 150°C satisfy the following formulas (1) and (2).

$$\text{Formula (1)} \quad Tx \times Fp \leq 11000$$

$$\text{Formula (2)} \quad Tp \times Fx \geq 250.$$

When the molding film satisfies the above formulas (1) and (2), coloring of a molded body can be suppressed while maintaining the transmittance in an infrared region. Although this mechanism is not clear, it is presumed that by setting the product of the tensile stress of the polyester film at 150°C and the thickness of the X layer to a certain value or less (formula (1)), and setting the product of the tensile stress of the X layer at 150°C and the thickness of the polyester film to a certain value or more (formula (2)), local stretching of the polyester film during molding processing is reduced, and the layer-pair thickness of the polyester film after molding can be reduced from locally varying.

In order to satisfy the formula (1), it is important to reduce Fp, that is, to lower the tensile stress of the polyester film at 150°C. For this purpose, using a material having a low glass transition temperature as a part of the polyester film makes the adjustment easy. Examples of the material having a low glass transition temperature include a method of adding the material to at least one of A layer and B layer constituting the polyester film.

In order to satisfy the formula (2), it is important to increase Fx, that is, to increase the tensile stress of the X layer at 150°C. Therefore, using a material having a high glass transition temperature for the resin constituting the X layer makes the adjustment easy. As a specific example, when the X layer is a polycarbonate resin layer, the glass transition temperature can be increased by increasing the volume average molecular weight of the polycarbonate resin, introducing a substituent into the bisphenol skeleton of the polycarbonate resin, adopting a transesterification method instead of a general phosgene method as a method of polymerizing the polycarbonate resin, and the like.

On the other hand, when a material having a high glass transition temperature is used as the resin constituting the X layer, thickness unevenness is likely to occur at the time of manufacturing the film constituting the X layer, and as the thickness Tx of the X layer is reduced, thickness unevenness appears more remarkably. That is, when the formula (2) is to be satisfied, thickness unevenness is likely to occur in the thickness range of Tx in Formula (1), and thus it is important to adjust the tensile stress Fp of the polyester film at 150°C.

Note that when there is a plurality of X layers, it is preferable from the above viewpoint that at least one X layer satisfies the formulas (1) and (2), but it is more preferable that all X layers satisfy the formulas (1) and (2) .

The value of Tx × Fp indicated in the formula (1) is more preferably 7500 or less, and further preferably 4000 or less. The lower limit of the value of Tx × Fp is not particularly limited, but is often 50 in consideration of the thickness of the polyester film having a metallic gloss tone. When there are a plurality of X layers, the preferable range of the values of Tx × Fp of all the X layers is as described above.

The value of Tp × Fx indicated in the formula (2) is more preferably 350 or more, and further preferably 500 or more. The upper limit of the value of Tx × Fp is not particularly limited, but is often 20,000 when considering the tensile stress of a general resin at 150°C. When there are a plurality of X layers, the preferable range of the values of Tp × Fx of all the X layers is as described above.

In addition, it is more preferable that the relationship of Tp × Fx ≤ Tx × Fp is satisfied and also both the formulas (1) and (2) are satisfied. When Tp × Fx and Tx × Fp have the above relationship, local stretching of the polyester film during molding processing is less likely to occur, and coloring of the molded body is easily suppressed.

The thickness of each layer can be measured by measuring a cross section when the molding film is cut in parallel with the thickness direction from an image taken with a scanning electron microscope. The 50% tensile stress of each layer at 150°C can be measured by performing a tensile test at 150°C with the longitudinal direction as the measurement direction (details will be described later). In a case where the longitudinal direction cannot be specified, a tensile test is performed for a direction arbitrarily set and each direction rotated from the direction by 15° to 175°, and if the formulas (1) and (2) are satisfied when a value in a direction in which the 50% tensile stress is maximum or a direction orthogonal thereto is used, it can be considered that the formulas (1) and (2) are satisfied.

In the molding film of the present invention, the glass transition temperature Tg (X) of the X layer and the glass transition temperature Tg (P) of the polyester film preferably satisfy the following formula (3). The method for measuring the glass transition temperatures of the X layer and the polyester is as described later.

$$\text{Formula (3) Tg (X)} \leq \text{Tg (P) + 70.}$$

When the formula (3) is satisfied, that is, when the glass transition temperature Tg (X) of the X layer is equal to or lower than the glass transition temperature Tg (P) + 70°C of the polyester film, the polyester film does not become excessively soft and a stable layer composition can be maintained when the temperature of the molding film is raised to a temperature at which the X layer is deformed (molded) during molding processing, so that unevenness in metallic tone appearance can be reduced.

In addition, the resin of the X layer constituting the molding film of the present invention will be described in detail later, but in the case of a non-crystalline resin, the glass transition temperature Tg (X) of the X layer and the glass transition temperature Tg (P) of the polyester film preferably satisfy the following formula (4).

$$\text{Formula (4) Tg (P) + 30} \leq \text{Tg (X).}$$

When the resin of the X layer is a non-crystalline resin and satisfies the formula (4), that is, when the glass transition temperature Tg (X) of the X layer is equal to or higher than the glass transition temperature Tg (P) of the polyester film + 30°C, it is possible to reduce the occurrence of a phenomenon in which the polyester film melts and loses a metallic tone, that is, a so-called washout phenomenon, for example, in the vicinity of an injection gate of the resin, when injection molding processing is performed.

When the resin of the X layer is crystalline, the fluidity of the resin of the X layer is lowered by the crystal portion of the molecular chain, and the washout resistance may be excellent even if the formula (4) is not satisfied.

As a method for adjusting the glass transition temperature of the resin of the X layer, for example, the known method described above can be adopted. In general, when a monomer having the same skeleton is used, the glass transition temperature tends to increase as the volume average molecular weight of the polymer increases and as the molecular weight distribution of the polymer decreases. The glass transition temperature can also be adjusted by introducing various substituents into the monomer skeleton. A specific method of adjusting the glass transition temperature will be described in Examples described later, but is not limited thereto, and can be appropriately selected.

The molding film of the present invention preferably has an average reflectance of 30% or more in a wavelength band of 400 nm to 700 nm. The average reflectance is more preferably 50% or more, and further preferably more than 75%. When it is desired to particularly increase the lightness of the metallic tone gloss, the average reflectance is preferably 80% or more, and more preferably 90% or more. On the other hand, the upper limit of the reflectance is not particularly specified, but is generally 99% in terms of the mechanism of the polyester film exhibiting reflectance by interference reflection. When the average reflectance in the wavelength band of 400 nm to 700 nm is 30% or more, the metallic gloss tone is at a sufficient level. In addition, when the molded body after molding processing is mounted on a building material, an automobile component, a mobile phone, an electrical product, a game machine component, or the like, the concealment is sufficiently maintained, so that the visibility of the inside can be suppressed. Note that the average reflectance in the wavelength band of 400 nm to 700 nm can be measured by a method described later.

The method of setting the average reflectance in the wavelength band of 400 nm to 700 nm within the above range is not particularly limited, but examples thereof include a method of controlling the layer thicknesses of the A layer and the B layer and the in-plane average refractive indexes of the A layer and the B layer under a condition in which the polyester film has the above-described layer composition. More specifically, a method can be included in which the difference between the in-plane average refractive index of the A layer and the in-plane average refractive index of the B layer is set to 0.005 or more and 0.200 or less, and the number of layers with a layer-pair thickness of 100 nm or more and less than 250 nm is set to 51 or more. By using this method, it is possible to achieve both metallic gloss tone and moldability without using metal.

In the polyester film constituting the molding film of the present invention, the difference between the in-plane average refractive index of A layer and the in-plane average refractive index of B layer is preferably 0.005 or more and 0.200 or less. When the difference between the in-plane average refractive indexes of both layers is 0.005 or more, the appearance of metallic gloss tone can be easily realized. When it is desired to particularly increase the lightness of the metallic gloss tone, the difference in in-plane refractive index is more preferably 0.050 or more. On the other hand, by setting the difference between the in-plane average refractive indexes of both layers to 0.200 or less, the occurrence of delamination between the layers during molding processing can be reduced.

In the polyester film constituting the molding film of the present invention, the number of layers with a layer-pair thickness of 100 nm or more and less than 250 nm is preferably 51 or more. When the number of layers with a layer-pair thickness of 100 nm or more and less than 250 nm is set to 51 or more, a metallic tone is easily exhibited. From the same viewpoint, the number of layers is preferably 150 or more, and more preferably 350 or more. When it is desired to particularly increase the lightness of the metallic gloss tone, it is more preferable to set the number of layers with a layer-pair thickness of 100 nm or more and less than 250 nm to 800 or more.

The thickness of the polyester film constituting the molding film of the present invention is preferably 30 um or more from the viewpoint of imparting a metallic tone to the molding film. From the above viewpoint, the thickness is preferably 60 um or more, and more preferably 80 um or more. On the other hand, the thickness of the polyester film is preferably 500 um or less from the viewpoint of film formability and moldability. From the above viewpoint, the thickness is preferably 300 um or less, and more preferably 150 um or less. Note that the thickness of the polyester film can be reduced by increasing a cast take-over speed, decreasing a discharge amount of molten resin from a spinneret per unit time, reducing a slit width of the spinneret, and the like, and these means can be appropriately combined to be used.

The resin of the X layer constituting the molding film of the present invention is preferably a thermoplastic resin. When the resin of the X layer is a thermoplastic resin, it may be either crystalline or non-crystalline. Examples of the crystalline resin include a polyethylene resin, a polypropylene resin, a polyamide resin/polyethylene terephthalate resin, a polybutylene terephthalate resin, and a polyethylene naphthalate resin. Examples of the non-crystalline resin include a polyvinyl chloride resin, a modified polyphenylene ether resin, a polycarbonate resin (hereinafter, it may be referred to as a PC), and an acrylic resin. The resin of the X layer is preferably a non-crystalline resin from the viewpoint of moldability. When the resin of the X layer is crystalline, the crystalline portion may inhibit moldability at the time of molding processing of the molding film of the present invention. The resin of the X layer preferably contains, among the non-crystalline resins, at least one of a polycarbonate resin, an acrylic resin, an acrylonitrile butadiene styrene resin, and a polystyrene resin as a main component, particularly from the viewpoint of ease of adjusting the glass transition temperature. Here, the main component refers to a component contained in an amount of more than 50 mass% and 100 mass% or less when a total amount of components constituting the layer is 100 mass%. The content of the polycarbonate resin when a plurality of polycarbonate resins are contained in the layer is calculated by summing all the polycarbonate resins. The same applies to a case where a plurality of acrylic resins, acrylonitrile butadiene styrene resins, or polystyrene resins are contained in the layer.

The polycarbonate resin used in the X layer constituting the molding film of the present invention is not particularly limited as long as the effect of the present invention is not impaired, and examples thereof include a polycarbonate resin obtained using 2,2-bis (4-hydroxyphenyl) propane (bisphenol A), a flame-retardant polycarbonate-based resin obtained using a mixture of bisphenol A and 2,2-bis (3,5-dibromo-4-hydroxyphenyl) propane (tetrabromobisphenol A), and a bisphenol A-based polycarbonate-polyorganosiloxane copolymer.

The acrylic resin to be used in the X layer constituting the molding film of the present invention is not particularly limited as long as the effect of the present invention is not impaired, but for example, a polymer alloy including a polymer mainly composed of a methacrylic acid ester, a copolymer of a methacrylic acid ester and another monomer, and a methacrylic resin and one or more types of other resins is preferable, a polymethyl methacrylate, a polyethyl methacrylate, a polybutyl methacrylate, a polyethylhexyl methacrylate, a polymethyl methacrylate styrene copolymer, a polymethyl methacrylate polyvinylidene fluoride alloy, and the like are preferable, and from the viewpoint of transparency, moldability, and scratch resistance, it is more preferable to use a polymethyl methacrylate.

The acrylonitrile butadiene styrene resin used in the X layer constituting the molding film of the present invention is not particularly limited as long as the effect of the present invention is not impaired, but for example, an α-methylstyrene ABS resin obtained by polymerizing α-methylstyrene in place of styrene in addition to acrylonitrile, butadiene, and styrene copolymerized, an ABS resin obtained by using phenylmaleimide and adding imide modification, an ASA resin obtained by polymerizing acrylic rubber in place of butadiene, an ACS resin obtained by polymerizing chlorinated polyethylene in place of butadiene, and an AES resin obtained by polymerizing ethylene propylene diene rubber in place of butadiene are preferable.

The polystyrene resin to be used in the X layer constituting the molding film of the present invention is not particularly limited as long as the effect of the present invention is not impaired, but for example, in addition to those obtained by polymerizing styrene alone, polymers of poly α-methylstyrene and styrene derivatives substituted at the meta position or the para position, those obtained by copolymerizing the styrene-based monomer, those obtained by copolymerizing various olefin-based resins, and the like are preferable, and a styrene homopolymer resin is more preferable from the viewpoint of transparency and moldability.

Note that the polycarbonate-based resin, the acrylic-based resin, the acrylonitrile-butadiene-styrene-based resin, and the polystyrene-based resin may be those to which various additives such as an ultraviolet absorber for imparting weather resistance, rubber particles for imparting flexibility, various dyes and pigments for coloring and light shielding are added.

When the type of the resin in the X layer is unknown, the type of the resin can be identified by combining known methods such as FT-IR, pyrolysis GC-MS, $^1$H-NMR, and $^{13}$C-NMR. In addition, when it is not clear whether the polycarbonate resin, the acrylic resin, the acrylonitrile butadiene styrene resin, or the polystyrene resin is the main component, that is, whether the components are contained in an amount of more than 50 mass% and 100 mass% or less when a total amount of components constituting the layer is 100 mass%, it is possible to separate the components by a known method such as a solvent extraction method or various types of chromatography to determine their contents (mass%).

The thickness of the X layer in the molding film of the present invention is preferably 50 um or more and 500 um or less from the viewpoint of processability as a molding film. When the thickness of the X layer is 50 um or more, moldability during molding processing is improved. On the other hand, when the thickness of the X layer is 500 um or less, processability and workability as a molding film can be secured, and at the same time, an increase in manufacturing cost can be reduced. From the above viewpoint, a preferable range of the thickness of the X layer is 100 um or more and 400 um or less, more preferably 150 um or more and 300 um or less, and still more preferably 200 um or more and 250 um or less.

The layer composition of the molding film of the present invention is not particularly limited as long as the molding film has the X layer on at least one surface of the polyester film, but it is preferable that the molding film has the X layers on both surfaces of the polyester film. For example, there is a case where the molding film is subjected to printing processing, such as a case where it is desired that a part of the molded body is subjected to a metallic tone, instead of the entire surface thereof. At this time, by forming the X layers on both surfaces of the polyester film, the adhesion of the ink can be improved, and warpage generated during heating for the drying of the printing ink can be suppressed. When a difference in linear expansion coefficient between the polyester film and the X layer is large, it is particularly effective to provide the X layers on both surfaces.

When the X layers are provided on both surfaces, the resins constituting the X layers (referred to as X1 layer and X2 layer) provided on both surfaces may be the same type of resin, or different resins may be selected. For example, both the X1 layer and the X2 layer may be layers containing polycarbonate resins as a main component, or the X1 layer may be a layer containing a polycarbonate resin as a main component and the X2 layer may be a layer containing an acrylic resin as a main component. In addition, when both the X1 layer and the X2 layer contain a polycarbonate resin as a main component, the polycarbonate resins as main components of both layers may be the same or different.

The molding film of the present invention preferably has an average transmittance of 70% or more in a wavelength band of 800 nm to 900 nm. It is more preferably 80% or more. The upper limit of the transmittance is not particularly specified, but is generally 95% because light is reflected on the film surface. Since the average transmittance in the wavelength band of 800 nm to 900 nm is 70% or more, deterioration in sensor sensitivity can be reduced when the molded body after molding processing is used as an infrared sensor cover. Note that the average transmittance in the wavelength band of 800 nm to 900 nm can be measured by a method described later.

The method of setting the average transmittance in the wavelength band of 800 nm to 900 nm within the above range is not particularly limited, but examples thereof include a method of controlling the layer thicknesses of the A layer and the B layer. More specifically, the number of layers with a layer-pair thickness of 250 nm or more and less than 300 nm is set to 50 layers or less, preferably 45 layers or less. The number of layers is preferably 30 or less, more preferably 10 or less.

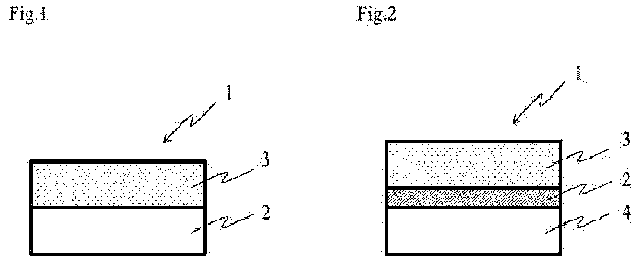

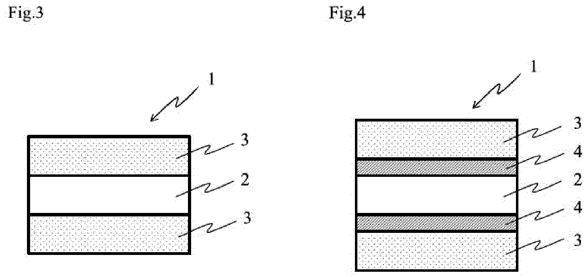

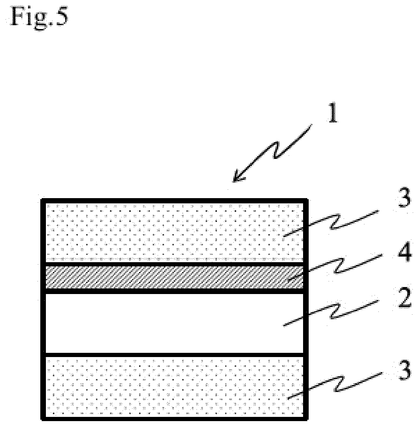

Specific aspects of the molding film of the present invention are shown in Figs. 1 to 5. In a molding film 1, an X layer 3 is provided on one surface of a polyester film 2. An adhesive layer 4 may be provided between the polyester film 2 and the X layer 3 (Fig. 2). The X layer 3 may be provided on both surfaces of the polyester film 2 (Fig. 3), or the adhesive layer 4 may be provided between the polyester film 2 on at least one surface and the X layer (Figs. 4 and 5). Since the molding film is subjected to insert molding processing or vacuum pressure molding processing, it is preferable to have X layers on both surfaces of the polyester film from the viewpoint of reducing warpage of the film during printing processing and improving heat resistance during molding processing.

The molding film of the present invention preferably has an adhesive layer between the X layer and the polyester film from the viewpoint of enhancing interlayer adhesion. The method for laminating the polyester film and the X layer with the adhesive layer interposed therebetween is not particularly limited, and it is possible to laminate them by a known method, for example, using an optical pressure-sensitive adhesive sheet or a dry lamination method. Among them, the dry lamination method is preferably used from the viewpoint of adhesion during molding.

The adhesive to be used in the adhesive layer in the molding film of the present invention is not particularly limited as long as the effect of the present invention is not impaired, but a two-component curable polyurethane-based adhesive is preferably used from the viewpoint of heat resistance during molding processing. The two-component curable polyurethane-based adhesive contains a main agent (polyol) having a hydroxyl group at a polymer terminal and a curing agent (polyisocyanate) having an isocyanate group, and is cured by forming a urethane bond by a reaction between the hydroxyl group and the isocyanate group.

Examples of the polyol include a polyether polyol and a polyester polyol. Examples of the polyether polyol include a polyoxyethylene polyol, a polyoxypropylene polyol, a polyoxyethylene-propylene copolymerized polyol, a polytetramethylene polyol, and mixtures thereof. Examples of the polyester polyol include a polyol obtained by polycondensation of a dicarboxylic acid (adipic acid, succinic acid, maleic acid, phthalic acid, and the like) and a glycol (ethylene glycol, propylene glycol, 1,4-butylene glycol, 1,6-hexane glycol, neopentyl glycol, and the like).

Examples of the polyisocyanate include aromatic polyisocyanates such as 2,4-tolylene diisocyanate, xylene diisocyanate, 2,6-tolylene diisocyanate, 4,4-diphenylmethane diisocyanate, polymethylene polyphenylene polyisocyanate, carbodiimide-modified MDI, and naphthalene diisocyanate; hexamethylene diisocyanate, isophorone diisocyanate, 4,4-dicyclohexylmethane diisocyanate, and alicyclic polyisocyanate.

Various additives such as a viscosity modifier, a leveling agent, an anti-gelling agent, an antioxidant, a heat resistant stabilizer, a light resistant stabilizer, a UV absorber, an easily slipping agent, a pigment, a dye, organic or inorganic fine particles, a filler, an antistatic agent, and a nucleating agent, for example, may be blended in the adhesive layer.

The thickness of the adhesive layer is preferably 0.5 um or more and 30 um or less from the viewpoint of achieving both adhesiveness and film appearance. When the thickness of the adhesive layer of the present invention is 0.5 um or more, adhesion between layers is sufficiently maintained. On the other hand, when the thickness of the adhesive layer of the present invention is 30 um or less, thickness unevenness of the layer is suppressed, and deterioration of film appearance is reduced. From the above viewpoint, a preferable range of the thickness of the adhesive layer is more preferably 1 um or more and 20 um or less, still more preferably 3 um or more and 15 um or less.

In the molding film of the present invention, it is also preferable that from the viewpoint of moldability, the X layer is in contact with the polyester film without an adhesive layer interposed therebetween. When a two-component curable polyurethane-based adhesive is used for the adhesive layer, it is preferable from the viewpoint of enhancing interlayer adhesion, but the molecules have a crosslinked structure causing thermoplasticity to be lost, and the adhesive may not follow the molded state of the polyester film or the X layer depending on the molding shape and conditions. In such a case, it is preferable to select a configuration in which the X layer is in contact with the polyester film.

Examples of the method for obtaining the molding film in which the X layer is in contact with the polyester film include a method in which the polyester film and a film for obtaining the X layer are hot-pressed at a temperature equal to or higher than the glass transition temperature of the X layer, and a method in which the X layer is formed by casting a molten resin on the polyester film. It is also preferable that the polyester film is subjected to a corona treatment before hot pressing to improve adhesion.

In the molding film having X layers on both surfaces of the polyester film, one X layer may have an adhesive layer between itself and the polyester film, and the other X layer may be in contact with the polyester film.

When the X layer of the molding film of the present invention is in contact with the polyester film, the adhesion strength is preferably 1.0 N/10 mm or more from the viewpoint of reducing delamination during molding. The thickness is more preferably 4.0 N/10 mm or more. The upper limit of the adhesion strength is not particularly limited, but is generally 200 N/10 mm or less in terms of the strength of the X layer or the polyester film itself. Examples of the method for setting the adhesion strength to 1.0 N/10 mm or more include a method in which hot pressing is performed at a temperature equal to or higher than the glass transition temperature of the X layer. The adhesion strength can be measured by a method described later.

An example of a preferred method for producing the polyester film constituting the molding film of the present invention will be described below, but the method for producing the polyester film is not limited thereto.

First, a thermoplastic resin A and a thermoplastic resin B are prepared in the form of pellets. The pellets are dried in hot air or under vacuum as necessary, and then fed to two respective extruders. The thermoplastic resin heated and melted to the melting point or higher in each extruder is extruded by equalizing an extrusion amount of the resin with a gear pump or the like, and foreign matters and a modified resin are removed through a filter or the like. The thermoplastic resin A and the thermoplastic resin B fed from different flow paths using two extruders are fed to a multilayer laminating apparatus. As the multi-layer laminating apparatus, a multi-manifold die, a feedblock, a static mixer, or the like can be used, but in particular, in order to efficiently obtain the laminate configuration of the polyester film in the present invention, it is desirable to use a feedblock including at least two or more separate members having a large number of fine slits. When such a feedblock is used, the apparatus does not become extremely upsized, and therefore, even when there are few foreign matters due to thermal degradation and the number of laminate layers is extremely large, it is possible to perform lamination with high accuracy. In addition, the lamination accuracy in the width direction is remarkably improved as compared with conventional techniques, and it is also easy to form an arbitrary layer thickness configuration. Since this apparatus is capable of adjusting the thickness of each layer by the shape (length, width, and gap) of the slit, an arbitrary layer thickness can be easily achieved.

At this time, in order to realize "the average reflectance in the wavelength band of 400 nm to 700 nm exceeds 30%", which is a preferred aspect of the molding film of the present invention, the layer thickness of each layer of the polyester film is preferably designed based on the following formula 1. The polyester film makes it possible to reflect/transmit light, and the reflectance thereof can be controlled by the difference in refractive index between the layer made of the thermoplastic resin A and the layer made of the thermoplastic resin B and by the number of layers.

$$\text{Formula 1: } 2 \times (na \cdot da + nb \cdot db) = \lambda$$

na: In-plane average refractive index of layer made of resin A
nb: In-plane average refractive index of layer made of resin B
da: Layer thickness of layer made of resin A (nm)
db: Layer thickness of layer made of resin B (nm).
λ: Main reflection wavelength (primary reflection wavelength)

The molten laminated body thus formed into a desired layer composition is discharged into a sheet shape from a slit portion of a die, and the sheet material is extruded onto a rotary cooling body such as a casting drum and cooled and solidified to obtain a casting film (unstretched film). At this time, it is preferable to bring the sheet material into close contact with the rotary cooling body such as a casting drum by an electrostatic force using a wire-like, tape-like, thin wire-like, or knife-like electrode, and to rapidly cool and solidify the sheet. In addition, it is also preferable to bring the sheet into close contact with the rotary cooling body such as a casting drum by blowing air from a slit-like, spot-like, or planar device, and rapidly cooling and solidifying the sheet, or bringing the sheet into close contact with the rotary cooling body using a nip roll, and rapidly cooling and solidifying the sheet.

The casting film (unstretched film) thus obtained is preferably biaxially stretched as necessary. The biaxial stretching refers to stretching in the longitudinal direction and the width direction. The stretching may be performed sequentially in two directions or simultaneously in two directions. Further, the casting film may be restretched in the longitudinal direction and/or the width direction.

First, a case of sequential biaxial stretching will be described. Here, the stretching in the longitudinal direction refers to stretching for imparting molecular orientation to the film in the longitudinal direction, and is usually performed by a circumferential speed difference of the roll. This stretching may be performed in one step by a pair of stretching rolls, or may be performed in multiple steps by using a plurality of stretching roll pairs. Although the stretch ratio varies depending on the type of the resin, it is usually preferably 2 to 15 times, and when polyethylene terephthalate is used in any of the thermoplastic resins that constitute the polyester film, the ratio is particularly preferably 2 to 7 times. The stretching temperature is preferably from the glass transition temperature of the resin having a higher glass transition temperature among the resins A and B constituting the polyester film to the glass transition temperature + 100°C.

In addition, the polyester film may be provided with an adhesion layer. As a method of providing the adhesion layer, a method of coating and laminating a coating agent is preferable. Examples of the method for coating the coating agent include a method in which coating is performed in a step different from the step of producing the polyester film in the present invention, a so-called off-line coating method, and a so-called in-line coating method in which coating is performed during the step of producing the polyester film in the present invention to laminate the adhesion layer at a time. It is preferable to adopt an in-line coating method from the viewpoint of cost and uniformity of the coating thickness, and a solvent for the coating liquid used in this case is preferably aqueous from the viewpoint of environmental pollution and explosion resistance, and it is the most preferable mode to use water.

When the adhesion layer is laminated by in-line coating, it is preferable to continuously apply a coating agent constituting the adhesion layer to a uniaxially stretched polyester film. As a method for applying a coating agent (aqueous coating agent) using water as a solvent, for example, a reverse coating method, a spray coating method, a bar coating method, a gravure coating method, a rod coating method, a die coating method, or the like can be used.

It is also preferable to subject the surface of the polyester film to a corona discharge treatment or the like before applying the aqueous coating agent. This is because the adhesiveness between the polyester film and the coating agent is improved, and the coatability is also improved. As long as the effect of the invention is not impaired, a crosslinking agent, an antioxidant, a heat stabilizer, a weather-resistant stabilizer, an ultraviolet absorber, an organic lubricant, a pigment, a dye, organic or inorganic particles, a filler, a surfactant, and the like may be blended in the adhesion layer.

The subsequently performed stretching in the width direction refers to stretching for imparting molecular orientation in the width direction to the film, and the film is usually conveyed using a tenter with both ends of the film being held with clips, heated and preheated, and then stretched in the width direction. The aqueous coating agent applied immediately before the tenter is dried at the time of preheating. Although the stretch ratio varies depending on the type of the resin, it is usually preferably 2 to 15 times, and when polyethylene terephthalate is used in any of the thermoplastic resin A or the thermoplastic resin B, the stretch ratio is particularly preferably 2 to 7 times. Further, the stretching temperature is preferably from the glass transition temperature of the resin having a higher glass transition temperature among the thermoplastic resins A and B constituting the polyester film in the present invention to the glass transition temperature + 120°C. The biaxially stretched polyester film is preferably subjected to a heat treatment at a temperature equal to or higher than the stretching temperature and equal to or lower than the melting point in the tenter in order to impart flatness and dimensional stability. After being heat-treated in this manner, the film is gradually cooled down uniformly, cooled to room temperature, and wound up by a winder. In addition, a relaxation treatment or the like may be combined as necessary during the gradual cooling from the heat treatment.

Then, a case of simultaneous biaxial stretching will be described. In the case of simultaneous biaxial stretching, a coating agent for forming an adhesion layer is continuously applied to the obtained cast film. As a method for applying a coating agent (aqueous coating agent) using water as a solvent, for example, a reverse coating method, a spray coating method, a bar coating method, a gravure coating method, a rod coating method, a die coating method, or the like can be suitably used.

It is also preferable to subject the surface of the polyester film in the present invention to a corona discharge treatment or the like before applying the aqueous coating material. This is because the adhesiveness between the polyester film and the coating agent is improved, and the coatability is also improved. Then, the cast film coated with the coating agent is led to a simultaneous biaxial tenter, conveyed with both ends of the film being held with clips, and stretched in the longitudinal direction and the width direction simultaneously and/or step by step. Examples of a simultaneous biaxial stretching machine include those of a pantograph type, a screw type, a drive motor type, and a linear motor type, but a simultaneous biaxial stretching machine of a drive motor type or a linear motor type is preferable because the machine is capable of changing the stretch ratio arbitrarily and capable of performing the relaxation treatment at any place. The stretch ratio varies depending on the type of resin, but the area ratio is usually preferably 6 to 50 times, and particularly preferably 8 to 30 times. In addition, the stretching temperature is preferably from the glass transition temperature of the resin having a higher glass transition temperature among the thermoplastic resins A and B to the glass transition temperature + 120°C.

The film biaxially stretched is preferably subsequently subjected to a heat treatment for imparting planarity and dimensional stability in the tenter at a temperature equal to or higher than the stretching temperature and equal to or lower than the melting point. In the heat treatment, it is preferable to perform a relaxation treatment in the longitudinal direction instantaneously immediately before and/or immediately after the film enters the heat treatment zone in order to reduce the distribution of the main orientation axis in the width direction. After being heat-treated in this manner, the film is gradually cooled down uniformly, cooled to room temperature, and wound up by a winder. In addition, a relaxation treatment in the longitudinal direction and/or the width direction may be performed as necessary during the gradual cooling from the heat treatment. It is preferable to perform the relaxation treatment in the longitudinal direction instantaneously immediately before and/or immediately after the film enters the heat treatment zone. After being heat-treated in this manner, the film is gradually cooled down uniformly, cooled to room temperature, and the polyester film is wound up by a winder.

Next, an example (dry lamination method) of the method for producing a molding film of the present invention will be described below, but the method for producing a molding film of the present invention is not limited thereto.

A coating material of an adhesive is applied to the polyester film obtained as described above. As a coating method in this case, an appropriate coating method may be selected, depending on the viscosity and coating amount of the adhesive coating material, from coating methods such as a gravure coater, a gravure reverse coater, a lip coater, a flexo coater, a blanket coater, a roll coater, a knife coater, an air knife coater, a kiss touch coater, a kiss touch reverse coater, a comma coater, a comma revere coater, and a micro reverse coater, but when a two-component curable polyurethane-based adhesive is used, a gravure coater is preferably used.

The solvent component of the adhesive is then passed through a drying oven to be dried. The drying temperature is selected depending on the type of the adhesive resin, the type of the solvent, the heat resistance of the polyester film, and the like, and is preferably 40°C to 120°C.

It is preferable that the multilayer film thus obtained is wound on a sheet winding core, and for the purpose of curing the two-component curable polyurethane-based adhesive, heat treatment is performed at 20 to 60°C for 24 to 168 hours while the obtained multilayer film is wound on a roll. When the temperature of the heat treatment is less than 20°C and/or the time of the heat treatment is less than 24 hours, the curing of the adhesive does not sufficiently proceed, sufficient adhesive strength is not obtained, and a deviation may occur in the film bonded in the subsequent step. In addition, when the temperature exceeds 60°C and/or the time of the heat treatment exceeds 168 hours, winding interference marks significantly appear on the rolled sheet, and a streak-like appearance defect may occur. The molding film of the present invention having the X layer on one surface can be obtained in this manner.

When the X layers are formed on both surfaces of the polyester film, the X layer may be further formed on the polyester film side of the molding film of the present invention having the X layer on one surface by the same method. Two or more polyester films produced as described above may be used to form the molding film of the present invention. The method for laminating a plurality of polyester films is not particularly limited, and lamination can be performed using the same method as the method for laminating the polyester film and the X layer described above.

The molding film of the present invention has a metallic gloss tone, and is excellent in moldability during molding processing and electromagnetic wave transparency of a molded body, and thus can be suitably used as a molded body.

The molded body of the present invention includes the molding film of the present invention. The method for forming the molded body is not particularly limited as long as the effect of the present invention is not impaired, and for example, a molding processing method such as insert molding or vacuum pressure molding can be used.

The resin used in the insert molding is not particularly limited as long as the effect of the present invention is not impaired, and for example, resins such as a polybutadiene-based resin, a polystyrene-based resin, a polypropylene-based resin, an acryl-based resin, a polyacrylonitrile-styrene-based copolymer resin, a polyacrylonitrile-butadiene-styrene-based copolymer resin, a polycarbonate-based resin, and a polyacrylonitrile-ethylene-propylene-styrene-based copolymer resin are used. In addition, various additives may be added as long as the effect of the present invention is not impaired. Examples of the additives preferably used include UV absorbers and pigments intended for coloring.

Further, the molded base material used in the vacuum and pressure molding is not particularly limited as long as the effect of the present invention is not impaired, and for example, resins such as a polybutadiene-based resin, a polystyrene-based resin, a polypropylene-based resin, an acryl-based resin, a polyacrylonitrile-styrene-based copolymer resin, a polyacrylonitrile-butadiene-styrene-based copolymer resin, a polycarbonate-based resin, and a polyacrylonitrile-ethylene-propylene-styrene-based copolymer resin, metals such as aluminum and magnesium, glass, carbon fiber molded products, and the like are used.

In order to enhance the designability of the molded body, a partial coloring layer may be provided on the molding film by a known method before the insert molding or vacuum pressure molding.

EXAMPLES

Hereinafter, the present invention will be described more specifically with reference to Examples, but the present invention is not limited thereto in any manner.

[Measurement and Evaluation Methods]

The measurement and evaluation shown in Examples were performed under the following conditions.

(1) Layer composition of polyester film, layer thickness, number of layers with a layer-pair thickness of 250 nm or more and less than 300 nm and number of layers with a layer-pair thickness of 100 nm or more and less than 250 nm

A cross section parallel to the thickness direction was cut out from a sample of the molding film using a microtome. Then, using a transmission electron microscope (TEM) H-7100 FA type manufactured by Hitachi, Ltd., the cross section of the polyester film section was observed at a magnification of 40,000 times at an accelerating voltage of 75 kV, and the layer composition and the layer thickness were measured by photographing the cross section. Note that in order to obtain high contrast, the samples were stained using $RuO_4$.

Next, a specific method for determining the layer composition and layer thickness of the polyester film will be described. A cross-sectional photograph taken with a TEM at a magnification of about 40,000 times was captured with an image size of 729 dpi using CanonScanD123U (manufactured by Canon Inc.). The image was stored in JPEG format, and then the JPEG file was opened using image processing software Image-Pro Plus ver. 4 (available from Planetron Co., Ltd.) to perform image analysis. In the image analysis processing, the relationship of the average brightness in the region sandwiched between two lines in the thickness direction and the width direction in the vertical thick profile mode was read as numerical data. Using spreadsheet software ("Excel" (registered trademark) 2000), data was collected in sampling step 6 (thinning 6) on the position (nm) and brightness data, and then 3-point moving average numerical processing was performed. Furthermore, the obtained data with periodically changing brightness was differentiated, the maximum value and the minimum value of the differential curve were read by a visual basic for applications (VBA) program, and the interval between the maximum value and the minimum value adjacent to each other was calculated as a layer thickness of one layer. This operation was performed for each photograph, and the layer thicknesses of all the layers were calculated. Among the obtained layer thicknesses, a thin film layer was defined as a layer having a thickness of less than 1 um. For the thin film layer, the average value of the sum of the layer thicknesses of the adjacent A layer and B layer was sequentially determined for all sets, and the number of layers with a layer-pair thickness of 250 nm or more and less than 300 nm and the number of layers with a layer-pair thickness of 100 nm or more and less than 250 nm were counted.

(2) Thickness of X layer and polyester film

Three 1-cm square samples were cut out from the center of the molding film in the width direction, and each sample was cut in the thickness direction using a microtome to obtain a section sample. The section sample was subjected to a metal sputtering treatment as necessary in order to increase the contrast, and then a cross section of the section sample was imaged at an appropriate magnification (for example, 200 times to 1000 times) using a scanning electron microscope S-3400N (manufactured by Hitachi High-Technologies Corporation). The layer thicknesses of the X layer and the polyester film were calculated by measurement from the obtained image. The average value of the thicknesses obtained from each of the three samples was defined as the thickness of the X layer and the polyester film. The presence or absence of the X layer and the presence of the X layer on only one side or both sides of the polyester film were also determined from the images captured here.

(3) 50% tensile stress at 150°C of X layer and polyester film

The adhesive layer was peeled off from the molding film, and the adhesive layer was removed with a solvent or cut with a knife to obtain an X layer and a polyester film. However, when the polyester film or the X layer used for the molding film was able to be prepared as a single film, the polyester film or the X layer was used (the same applies to the subsequent measurement and evaluation). The obtained sample was cut into a size of 10 mm (width direction) $\times$ 150 mm (longitudinal direction), and set in a universal testing instrument "Tensilon" (registered trademark) UCT-100 manufactured by ORIENTEC CORPORATION so as to have an initial test length of 100 mm. A tensile test was performed at 150°C to determine a 50% tensile stress (a stress when the distance between clips was extended to 150 mm). Five samples were measured, and the average value thereof was defined as the 50% tensile stress of the polyester film.

(4) Glass transition temperature of X layer and polyester film

An X layer and a polyester film were obtained from the molding film by the method described in (3). About 5 mg of each was weighed, and sandwiched between aluminum pans, and the temperature was raised from 25°C to 300°C at 20°C/min using DSCvesta Smart Loader manufactured by Rigaku Corporation, and measurement was performed. The glass transition temperature (Tg) was determined from the obtained DSC data. Note that when the glass transition temperature of each of the thermoplastic resin A and the thermoplastic resin B was determined from the DSC curve measured by the above method with respect to the glass transition temperature of the polyester film, the higher side temperature was defined as the glass transition temperature (Tg (P)) of the polyester film. In addition, in a case where only one glass transition was able to be confirmed from the DSC curve when, for example, the glass transition temperatures of the thermoplastic resin A and the thermoplastic resin B were close to each other, the temperature was defined as the glass transition temperature (Tg (P)) of the polyester film.

(5) Average reflectance in wavelength band of 400 to 700 nm

A 5-cm square sample was cut out from the center of the molding film. Next, the relative reflectance at an incident angle $\Phi$ of 10 degrees was measured using a spectrophotometer U-4100 manufactured by Hitachi, Ltd. The inner wall of the attached integrating sphere is barium sulfate, and the standard plate is aluminum oxide. The measurement was performed at a measurement wavelength of 250 nm to 1200 nm, a slit of 2 nm (visible)/automatic control (infrared), a gain of 2, and a scanning speed of 600 nm/min. The backside of the sample was painted black with an oil-based ink. Next, the average reflectance in the wavelength band of 400 to 700 nm was calculated. The average reflectance was obtained by calculating the area surrounded by the reflection curve and the wavelength band based on Simpson's formula using the data of the absolute reflectance for each wavelength of 1 nm and dividing the area by 300 nm, which is the width of the wavelength band. A detailed description of Simpson's rule is described in "Numerical Computation Method for Electronic Calculators I" (Baifukan) (1965) written by Jiro Yamauchi et al.

(6) Average transmittance in wavelength band of 800 to 900 nm

A 5-cm square sample was cut out from the molding film. Next, the transmittance at an incident angle $\Phi$ of 0 degrees was measured using a spectrophotometer U-4100 manufactured by Hitachi, Ltd. The inner wall of the attached integrating sphere is barium sulfate. The measurement was performed at a measurement wavelength of 250 nm to 1200 nm, a slit of 2 nm (visible)/automatic control (infrared), a gain of 2, and a scanning speed of 600 nm/min. Next, the average transmittance in the wavelength band of 800 to 900 nm was calculated. As a method of calculating the average reflectance, the area surrounded by the reflection curve and the wavelength band was calculated based on Simpson's formula using the data of the absolute reflectance for each wavelength of 1 nm and dividing the area by 100 nm, which is the width of the wavelength band to obtain the average transmittance.

(7) Presence or absence of adhesive layer

Using a rotary microtome manufactured by Nihon Microtome Laboratory Inc., a sample prepared by cutting a molding film in a vertical direction was observed with a scanning electron microscope (S-3400N manufactured by Hitachi, Ltd.) at an observation magnification of 1,000 to 10,000 times to determine the presence or absence of an adhesive layer.

(8) Adhesion strength

The molding film was sampled to a size of 10 mm × 200 mm. The interface between the X layer and the polyester film was separated using a cutter knife in a region of approximately 10 mm × 10 mm at the end of the sample. The sample was subjected to a peeling test using Autograph AG-IS manufactured by Shimadzu Corporation under the conditions of a peeling angle of 90 ° and a peeling rate of 200 mm/min. The average value of the results of three peeling tests was defined as the adhesion strength.

(9) Evaluation of warpage during drying of coloring layer

Using a screen plate having a checkered pattern shape with a grid size of 10 mm × 10 mm and a screen printer, an acrylic/urethane-based black ink was applied to the surface of a molding film cut out into a size of 200 mm × 300 mm so that the coating thickness after drying was 20 um, and drying was performed for 10 minutes in a hot air oven set at 80°C. The warpage of the film immediately before being taken out of the oven 10 minutes after being put into the drying step was evaluated according to the following criteria, and A and B were regarded as being acceptable.

A: The warpage of the film was less than 15 mm immediately before being taken out of the oven.
B: The warpage of the film was 15 mm or more and less than 50 mm immediately before being taken out of the oven.
C: The warpage of the film was 50 mm or more immediately before being taken out of the oven.

(10) Molding followability during molding processing

The molding film sample prepared as described in (9) was set in an injection molding machine manufactured by The Japan Steel Works, Ltd., the mold temperature of which was set to 60°C, and injection molding with a polycarbonate resin heated to 230°C was performed to obtain a molded body. The moldability of a decorative molding film was evaluated according to the following criteria based on the state in which the obtained molded body was molded along a mold (contraction ratio: molding height/bottom surface diameter), and A and B were regarded as being acceptable.

A: Molding was able to be performed at a contraction ratio of 0.3 or more.
B: Molding was able to be performed at a contraction ratio of 0.1 or more and less than 0.3, but molding was not able to be performed at a contraction ratio of 0.3 or more.
C: Molding was not able to be performed at a contraction ratio of less than 0.1.

(11) Washout during molding processing

The degree of reduction in metallic tone (due to melting of the polyester film) of the black ink coated printing portion of the sample for moldability evaluation in (10) was visually confirmed in a place other than that, and evaluation was performed according to the following criteria, and a sample having an evaluation of A, B, or C was regarded as being acceptable.

A: Neither reduction nor disappearance of the metallic tone was observed at a portion outside 10 mm from the injection gate of the molded body.
B: A reduction in the metallic tone was observed at a portion outside 10 mm and within 40 mm from the injection gate of the molded body, but a disappearance of the metallic tone was not observed.
C: A disappearance of the metallic tone was observed at a portion outside 10 mm and within 40 mm from the injection gate of the molded body.
D: A reduction or a disappearance of the metallic tone was observed in a portion outside 40 mm from the injection gate of the molded body.

(12) Lightness of molded processed product

Samples for moldability evaluation in (10) were visually evaluated according to the following criteria from the surface provided with the checkered pattern coloring layer, and a sample having an evaluation of A, B, or C was regarded as being acceptable.

A: The checkered pattern was able to be identified in an environment of 0.2 lux.
B: The checkered pattern was not able to be identified in an environment of 0.2 lux, but the checkered pattern was able to be identified in an environment of 5.0 lux.
C: The checkered pattern was not able to be identified in an environment of 5.0 lux, but the checkered pattern was able to be identified in an environment of 10 lux.
D: The checkered pattern was not able to be identified even in an environment of 10 lux.

(13) Coloring of molded processed product

The coloring of a portion, not coated with the black ink, of the sample for moldability evaluation in (10) was visually evaluated according to the following criteria, and a sample having an evaluation of A, B, or C was regarded as being acceptable. Note that those having molding followability of C rank were excluded from the evaluation target.

A: No coloring was observed at a contraction ratio of 0.4 or more.
B: Coloring was observed at a contraction ratio of 0.4 or more, but coloring was not observed at a contraction ratio of 0.3 or more and less than 0.4.
C: Coloring was observed at a contraction ratio of 0.3 or more, but coloring was not observed at a contraction ratio of 0.1 or more and less than 0.3.
D: None of A, B, and C was applicable.

(14) Unevenness of metallic tone in molded processed product

The unevenness of the metallic tone of a portion, not coated with the black ink, of the sample for moldability evaluation in (10) was visually evaluated according to the following criteria, and a sample having an evaluation of A or B was regarded as being acceptable. Note that those having molding followability of C rank were excluded from the evaluation target.

A: No unevenness of the metallic tone was observed in any part of the molded body.
B: Unevenness of the metallic tone was observed in a region having an area of less than 20% of the metallic tone portion of the molded body.
C: Neither A nor B was applicable.

(15) In-plane refractive index of A layer or B layer of polyester film

The resin used for the A layer was brought into a molten state at 290°C by a biaxial extruder with a vent, guided to a T-die via a gear pump and a filter, and molded into a sheet, and then brought into close contact with a casting drum maintained at a surface temperature of 25°C by electrostatic application, and rapidly cooled and solidified to obtain a cast film having a thickness of 100 $\mu$m. Sampling was performed from the center in the width direction of the obtained film, and the refractive indexes in the flow direction and the width direction of the film were measured using an Abbe refractometer NAR 4T manufactured by ATAGO CO., LTD. and a sodium D line as a light source, and the average value thereof was defined as the in-plane refractive index. Similarly, for the B layer, a cast film was prepared using the resin used for the B layer, and the in-plane refractive index was determined.

[Thermoplastic Resin and the Like Used in Production of Molding Film]

As the thermoplastic resin for obtaining the polyester film used for the molding film, for example, the following resins were used.

(Thermoplastic Resin A-1)

0.09 parts by weight of magnesium acetate and 0.03 parts by weight of antimony trioxide based on the amount of dimethyl terephthalate were added to a mixture of 100 parts by weight of dimethyl terephthalate and 60 parts by weight of ethylene glycol, and the mixture was heated to increase temperature by a conventional method to perform transesterification reaction. Subsequently, 0.020 parts by weight of an 85% aqueous phosphoric acid solution based on the amount of dimethyl terephthalate was added to the transesterification reaction product, and then the reaction product was transferred to a polycondensation reaction tank. Furthermore, the reaction system was gradually depressurized while performing heating to increase temperature, and a polycondensation reaction was performed at 290°C under a reduced pressure of 1 mmHg by a conventional method to obtain polyethylene terephthalate (hereinafter, it may be referred to as PET) having an intrinsic viscosity (IV) of 0.63. This was defined as a thermoplastic resin A-1.

(Thermoplastic Resin A-2)

Polymerization was performed in the same manner as for the thermoplastic resin A-1, except that a mixture of 100 parts by weight of dimethyl 2,6-naphthalenedicarboxylate and 60 parts by weight of ethylene glycol was used, to obtain a polyethylene naphthalate (hereinafter, it may be referred to as PEN) resin having an intrinsic viscosity (IV) of 0.67. This was defined as a thermoplastic resin A-2.

(Thermoplastic Resin A-3)

Polymerization was performed in the same manner as for the thermoplastic resin A-1, except that a mixture of 50 parts by weight of dimethyl terephthalate, 100 parts by weight of dimethyl 2,6-naphthalenedicarboxylate, and 60 parts by weight of ethylene glycol was used, to obtain a copolymerized polyester resin having an intrinsic viscosity (IV) of 0.65. This was defined as a thermoplastic resin A-3.

(Thermoplastic Resin B-1)

A copolymerized polyester resin having an intrinsic viscosity (IV) of 0.55 obtained by copolymerizing 21 mol% of spiroglycol (SPG) and 24 mol% of cyclohexanedicarboxylic acid (CHDC) was defined as a thermoplastic resin B-1.

(Thermoplastic Resin B-2)

A copolymerized polyester resin having an intrinsic viscosity (IV) of 0.72 obtained by copolymerizing 30 mol% of cyclohexanedimethanol (CHDM) was defined as a thermoplastic resin B-2.

(Thermoplastic Resin B-3)

A copolymerized polyester resin mixture obtained by mixing the thermoplastic resin A-1 and the thermoplastic resin B-2 at a ratio of 65 : 35 (mass ratio) was defined as a thermoplastic resin B-3.

(Thermoplastic Resin B-4)

A copolymerized polyester resin mixture obtained by mixing the thermoplastic resin A-1 and the thermoplastic resin B-2 at a ratio of 70 : 30 (mass ratio) was defined as a thermoplastic resin B-4.

(Thermoplastic Resin B-5)

A copolymerized polyester resin mixture obtained by mixing the thermoplastic resin A-1 and the thermoplastic resin B-2 at a ratio of 75 : 25 (mass ratio) was defined as a thermoplastic resin B-5.

(X Layer Forming Film)

(Film C-1 (PET))

"Lumirror" (registered trademark) U48 manufactured by Toray Industries, Inc. with a film thickness of 125 um or 250 $\mu$m was used.

(Film C-2 (PMMA))

An acrylic resin film "Technolloy" (registered trademark) S001 manufactured by Sumika Acryl Co., Ltd. with a film thickness of 125 um was used.

(Film C-3 (ABS))

An ABS film manufactured by TOWA KAKO CO., LTD., having a film thickness of 100 um was used.

(Film C-4 (PS))

"Styrophane" (registered trademark) GL manufactured by Oishi Sangyo Co., Ltd. with a film thickness of 100 um was used.

(Film C-5 (PC1))

A polycarbonate resin (weight average molecular weight: 8000) polymerized by a phosgene method was brought into a molten state at 280°C by a biaxial extruder, then guided to a T-die via a gear pump and a filter to be molded into a sheet, and then brought into close contact with a casting drum maintained at a surface temperature of 25°C to be rapidly cooled and solidified to obtain a cast film, and the cast film was wound up by a winder. Two kinds of film samples having thicknesses of 125 um and 250 um were obtained by adjusting the deposition rate.

(Film C-6 (PC2))

Two kinds of film samples having thicknesses of 125 $\mu$m and 250 um were obtained in the same manner as in (Film C-5) except that a polycarbonate resin (weight average molecular weight: 40,000) polymerized by a phosgene method was used.

(Film C-7 (PC3))

Two kinds of film samples having thicknesses of 125 $\mu$m and 250 um were obtained in the same manner as in (Film C-5) except that a polycarbonate resin (weight average molecular weight: 40,000) polymerized by a transesterification method was used.

(Film C-8 (PC4))

Two kinds of film samples having thicknesses of 125 $\mu$m and 250 um were obtained in the same manner as in (Film C-5) except that a polycarbonate resin (weight average molecular weight: 40,000) polymerized by a phosgene method using 1,1-Bis (4-hydroxyphenyl) cyclohexane was used instead of bisphenol A.

(Example 1)

(Production of Polyester Film)

The thermoplastic resin A-1 and the thermoplastic resin B-5 were each brought into a molten state at 290°C by a separate biaxial extruder with a vent, and then joined by a 901-layer feedblock having 4 separate members each having 225 slits via a gear pump and a filter. The outermost layers on both sides to be the thick film layer were made of the thermoplastic resin A, the thermoplastic resin A and the thermoplastic resin B were alternately laminated, and the layer thickness of the layer made of the thermoplastic resin A and the layer thickness of the layer made of the thermoplastic resin B adjacent to each other were made substantially the same. Subsequently, the resin was guided to a T-die and molded into a sheet, and then brought into close contact with a casting drum maintained at a surface temperature of 25°C by electrostatic application to be rapidly cooled and solidified, thereby obtaining a cast film. Thereafter, the obtained cast film was heated with a group of rolls set at 75°C, and then stretched 3.3 times in the vertical direction (longitudinal direction) while rapidly heated from both sides of the film with a radiation heater in a stretching section of 100 mm in length, and then cooled once to obtain a uniaxially stretched film. The obtained uniaxially stretched film was guided to a tenter, preheated with hot air at 100°C, and then stretched 3.5 times in the transverse direction at a temperature of 110 to 150°C. The biaxially stretched film was directly subjected to a heat treatment with hot air at 240°C in the tenter, then subjected to a 7% relaxation treatment in the width direction at the same temperature, then cooled to room temperature, and wound up with a winder.

(Production of Molding Film)

Using a gravure coating apparatus, a two-component polyurethane-based thermosetting adhesive (dry laminate adhesive BLS-PC21 manufactured by Toyo Ink Co., Ltd.) was reversely applied in a wet application amount of 5 g/m$^2$ to one surface of the obtained polyester film, and dried at a drying temperature of 70°C to 90°C and a speed of 20 m/min. Thereafter, the polyester-based resin film (film C-1) having a thickness of 250 um was bonded using nip rolls at a nip pressure of 0.4 MPa and a temperature of 40°C to form an X layer (X1 layer), thereby obtaining a desired molding film.

The evaluation results of the obtained polyester film, molding film, and molded body using them are shown in Table 1.

(Examples 2 to 9)

A polyester film and a molding film were obtained in the same manner as in Example 1 except that the thermoplastic resin A, the thermoplastic resin B, and the film for forming the X1 layer were as shown in Table 1. The results of evaluation are shown in Table 1.

(Example 10)

A PC-based resin film (film C-5) having a thickness of 125 $\mu$m was bonded to the other surface of the polyester film of the molding film obtained in Example 9 in the same manner to form an X layer (X2 layer), thereby obtaining a molding film. The results of evaluation are shown in Table 1.

(Examples 11 to 15)

A molding film was obtained in the same manner as in Example 10 except that the thicknesses of the thermoplastic resin A, the thermoplastic resin B, the film for forming the X1 layer and the X2 layer, and the polyester film were as shown in Tables 1 and 2. The results of evaluation are shown in Tables 1 and 2. The thickness of the polyester film was adjusted by changing the deposition rate.

(Example 16)

A polyester film was obtained in the same manner as in Example 15. Then, a polyester film and a PC-based resin film (film C-5) having a thickness of 250 um were passed at a line speed of 5 m/min while a pressure of 10 MPa was applied to two opposing metal rolls (a diameter of 180 mmΦ) set at a temperature of 120°C to form an X layer (X1 layer), thereby obtaining a molding film. The results of evaluation are shown in Table 2.

(Example 17)

A polyester film was obtained in the same manner as in Example 16 except that an adhesion layer was provided. Specifically, the adhesion layer was provided as follows. In the production of a polyester film, the following adhesion coating material was applied onto a uniaxially stretched film by a bar coating method so that the application amount on the film after stretching and drying in the width direction was 0.2 g/m$^2$. For the adhesion coating material, the following coating materials (a) to (g) were mixed so that (a) / (b) / (c) / (d) / (e) / (f) / (g) = 100/100/75/25/60/10/15 (mass ratio), and pure water was mixed so that the solid concentration of the coating agent was 3 mass% to adjust the concentration.

    (a): Sannalon WG658 (solid content concentration: 30 mass%) manufactured by Sannan Chemical Industry Co., Ltd.
    (b): "Erastron" (registered trademark) E-37 (solid content concentration: 28 mass%) manufactured by DKS Co., Ltd.
    (c): CR-5L (solid content concentration: 100 wt%) manufactured by DIC Corporation
    (d): "EPOCROS" (registered trademark) WS-500 (solid content concentration: 40 wt%) manufactured by Nippon Shokubai Co., Ltd.
    (e): "CARBODILITE" (registered trademark) V-04 (solid content concentration: 40%) manufactured by Nisshinbo Chemical Inc.
    (f): "Spherica" (registered trademark) Slurry 14 manufactured by JGC Catalysts and Chemicals Ltd.
    (g): "Olfine" (registered trademark) EXP4051 (solid content concentration: 50%) manufactured by Nissin Chemical Industry Co., Ltd.

Thereafter, a PC-based resin film (film C-5) having a thickness of 125 um was laminated by hot pressing in the same manner as in Example 16 to form an X layer (X1 layer), and then a PC-based resin film (film C-5) having a thickness of 125 um was laminated on the opposite surface to form an X layer (X2 layer), thereby obtaining a molding film. The results of evaluation are shown in Table 2.

(Example 18)

A polyester film was obtained in the same manner as in Example 17 except that the thermoplastic resin A-1 was used instead of the thermoplastic resin A-2 at the time of producing the polyester film. Thereafter, in the same manner as in Example 16, two obtained polyester films were laminated by hot pressing, a PC-based resin film (film C-5) having a thickness of 125 um was then laminated by hot pressing, and a PC-based resin film (film C-5) having a thickness of 125 um was then laminated on the opposite surface to obtain a molding film. The results of evaluation are shown in Table 2.

(Examples 19 to 21)

A molding film was obtained in the same manner as in Example 18 except that the films for forming the X1 layer and the X2 layer were as shown in Table 2. The results of evaluation are shown in Table 2.

(Examples 22 to 24)

A molding film was obtained in the same manner as in Example 21 except that the polyester film was as shown in Table 2. Note that the configuration of the feedblock was changed, and a polyester film was prepared so that the number of laminate layers and the layer-pair thickness of the A layer and the B layer described in Table 2 were obtained. The deposition rate was adjusted so that the thickness of the polyester film was as shown in Table 2. The results of evaluation are shown in Table 2.

(Comparative Example 1)

The polyester film obtained in Example 1 was used as it was with no X layer formed thereon. The results of evaluation are shown in Table 1.

(Comparative Example 2)

The polyester film obtained in Example 14 was used as it was with no X layer formed thereon. The results of evaluation are shown in Table 1.

(Comparative Example 3)

An indium vapor deposition layer having a thickness of 50 nm was formed on one surface of "Lumirror" (registered trademark) U48 (film thickness: 125 um) manufactured by Toray Industries, Inc. using a vacuum vapor deposition machine. An acrylic resin film (film C-2) was formed on the indium-deposited surface, and a PC-based resin film (film C-5) was formed on the opposite surface in the same manner as in Example 15 to form an X1 layer and an X2 layer, thereby obtaining a molding film. The results of evaluation are shown in Table 1.

[Table 1-1]

| | | Unit | Example 1 | Example 2 | Example 3 | Example 4 | Example 5 | Example 6 | Example 7 |
|---|---|---|---|---|---|---|---|---|---|
| Polyester film | Thermoplastic resin A (A layer) | - | A-1 | A-1 | A-1 | A-2 | A-1 | A-1 | A-1 |
| | Thermoplastic resin B (B layer) | - | B-5 | B-4 | B-1 | B-3 | B-1 | B-1 | B-1 |
| | Number of laminate layers of A layer and B layer | - | 901 | 901 | 901 | 901 | 901 | 901 | 901 |
| | Number of layers with a layer-pair thickness of 250 nm or more and less than 300 nm | - | 290 | 290 | 290 | 290 | 290 | 290 | 290 |
| | Number of layers with a layer-pair thickness of 100 nm or more and less than 250 nm | - | 602 | 602 | 602 | 602 | 602 | 602 | 602 |
| | Thickness (Tp) | $\mu$m | 117 | 117 | 117 | 117 | 117 | 117 | 117 |
| | 50% tensile stress under 150°C (Fp) | MPa | 35 | 33 | 33 | 42 | 33 | 33 | 33 |
| | Glass transition temperature (Tg (P)) | °C | 105 | 105 | 105 | 147 | 105 | 105 | 105 |
| | In-plane refractive index of A layer | - | 1.579 | 1.579 | 1.579 | 1.699 | 1.579 | 1.579 | 1.579 |
| | In-plane refractive index of a layer | - | 1.577 | 1.572 | 1.529 | 1.569 | 1.529 | 1.529 | 1.529 |
| | Difference in in-plane refractive index between A layer and B layer | - | 0.002 | 0.007 | 0.050 | 0.080 | 0.050 | 0.050 | 0.050 |
| X1 layer | Type of resin | - | PET | PET | PET | PET | Acrylic | ABS | PS |
| | Thickness (Tx1) | $\mu$m | 250 | 125 | 125 | 125 | 125 | 100 | 100 |
| | 50% tensile stress under 150°C (Fx1) | MPa | 71 | 71 | 71 | 71 | 0.2 | 0.3 | 3 |
| | Glass transition temperature (Tg (X1)) | $\mu$m | 105 | 105 | 105 | 105 | 105 | 104 | 145 |
| | Tx1 × Fp | m·Pa | 8750 | 4125 | 4125 | 5250 | 9125 | 3300 | 3300 |
| | Tp × Fx1 | m·Pa | 8307 | 8307 | 8307 | 8307 | 23 | 35 | 351 |
| | Tg (X1) - Tg (P) | °C | 0 | 0 | 0 | -92 | 0 | -1 | 40 |
| | Thickness of adhesive layer | $\mu$m | 3 | 3 | 3 | 3 | 3 | 3 | 3 |
| | Adhesion strength to polyester film (When the X1 layer and the polyester film are in contact with each other) | N/10 mm | - | - | - | - | - | - | - |

| | | Unit | Example 1 | Example 2 | Example 3 | Example 4 | Example 5 | Example 6 | Example 7 |
|---|---|---|---|---|---|---|---|---|---|
| X2 layer | Type of resin | - | No X2 layer | No X2 layer | No X2 layer | No X2 layer | No X2 layer | No X2 layer | No X2 layer |
| | Thickness (Tx2) | μm | - | - | - | - | - | - | - |
| | 50% tensile stress under 150°C (Fx2) | MPa | - | - | - | - | - | - | - |
| | Glass transition temperature (Tg (X2)) | μm | - | - | - | - | - | - | - |
| | Tx2 × Fp | m·Pa | - | - | - | - | - | - | - |
| | Tp × Fx2 | m·Pa | - | - | - | - | - | - | - |
| | Tg (X2) - Tg (P) | °C | - | - | - | - | - | - | - |
| | Thickness of adhesive layer | μm | - | - | - | - | - | - | - |
| | Adhesion strength to polyester film (When the X2 layer and the polyester film are in contact with each other) | N/10 mm | - | - | - | - | - | - | - |
| Average reflectance in wavelength band of 400 to 700 nm | | % | 32 | 51 | 69 | 77 | 77 | 74 | 77 |
| Average transmittance in wavelength band of 800 to 900 nm | | % | 79 | 53 | 39 | 35 | 35 | 36 | 35 |
| Warpage during drying step | | - | B | B | B | B | C | C | C |
| Molding followability during molding processing | | - | C | C | C | C | B | B | B |
| Washout during molding processing | | - | A | A | A | A | C | C | B |
| Lightness of molded processed product | | - | D | C | B | B | B | B | B |
| Coloring of molded processed product | | - | - | - | - | - | C | C | B |
| Unevenness of metallic tone in molded processed product | | - | - | - | - | - | A | A | A |

[Table 1-2]

| | | Unit | Example 8 | Example 9 | Example 10 | Example 11 | Example 12 | Example 13 | Example 14 |
|---|---|---|---|---|---|---|---|---|---|
| Polyester film | Thermoplastic resin A (A layer) | - | A-1 | A-2 | A-2 | A-2 | A-3 | A-2 | A-2 |
| | Thermoplastic resin B (B layer) | - | B-1 | B-3 | B-3 | B-3 | B-1 | B-1 | B-1 |
| | Number of laminate layers of A layer and B layer | - | 901 | 901 | 901 | 901 | 901 | 901 | 901 |
| | Number of layers with a layer-pair thickness of 250 nm or more and less than 300 nm | - | 290 | 290 | 290 | 290 | 48 | 26 | 10 |
| | Number of layers with a layer-pair thickness of 100 nm or more and less than 250 nm | - | 602 | 602 | 602 | 602 | 824 | 826 | 832 |
| | Thickness (Tp) | $\mu$m | 117 | 117 | 117 | 117 | 104 | 95 | 92 |
| | 50% tensile stress under 150°C (Fp) | MPa | 33 | 42 | 42 | 42 | 37 | 42 | 42 |
| | Glass transition temperature (Tg (P)) | °C | 105 | 197 | 147 | 147 | 125 | 147 | 147 |
| | In-plane refractive index of A layer | - | 1.579 | 1.649 | 1.649 | 1.699 | 1.611 | 1.611 | 1.611 |
| | In-plane refractive index of a layer | - | 1.529 | 1.569 | 1.569 | 1.569 | 1.529 | 1.529 | 1.529 |
| | Difference in in-plane refractive index between A layer and B layer | - | 0.050 | 0.080 | 0.080 | 0.080 | 0.082 | 0.082 | 0.082 |
| X1 layer | Type of resin | - | PC1 | PC1 | PC 1 | PC1 | PC1 | PC1 | PC1 |
| | Thickness (Tx1) | $\mu$m | 125 | 125 | 125 | 250 | 250 | 250 | 250 |
| | 50% tensile stress under 150°C (Fx1) | MPa | 3.1 | 3.1 | 3.1 | 3.1 | 3.1 | 3.1 | 3.1 |
| | Glass transition temperature (Tg (X1)) | $\mu$m | 145 | 145 | 145 | 145 | 145 | 145 | 145 |
| | Tx1 × Fp | m Pa | 4125 | 5250 | 5250 | 10500 | 9250 | 10500 | 10500 |
| | Tp × Fx1 | m Pa | 363 | 363 | 363 | 363 | 322 | 295 | 285 |
| | Tg (X1) - Tg (P) | °C | 40 | -2 | -2 | -2 | 20 | -2 | -2 |
| | Thickness of adhesive layer | $\mu$m | 3 | 3 | 3 | 3 | 3 | 3 | 3 |
| | Adhesion strength to polyester film (When the X1 layer and the polyester film are in contact with each other) | N/10 mm | - | - | - | - | - | - | - |

(continued)

| | | Unit | Example 8 | Example 9 | Example 10 | Example 11 | Example 12 | Example 13 | Example 14 |
|---|---|---|---|---|---|---|---|---|---|
| X2 layer | Type of resin | - | No X2 layer | No X2 layer | PC 1 | PC1 | PC1 | PC1 | PC1 |
| | Thickness (Tx2) | μm | - | - | 125 | 125 | 125 | 125 | 125 |
| | 50% tensile stress under 150°C (Fx2) | MPa | - | - | 3.1 | 3.1 | 3.1 | 3.1 | 3.1 |
| | Glass transition temperature (Tg (X2)) | μm | - | - | 145 | 145 | 145 | 145 | 145 |
| | Tx2 × Fp | m Pa | - | - | 5250 | 5250 | 4625 | 5250 | 5250 |
| | Tp × Fx2 | m Pa | - | - | 363 | 363 | 322 | 295 | 285 |
| | Tg (X2) - Tg (P) | °C | - | - | -2 | -2 | 20 | -2 | -2 |
| | Thickness of adhesive layer | μm | - | - | 3 | 3 | 3 | 3 | 3 |
| | Adhesion strength to polyester film (When the X2 layer and the polyester film are in contact with each other) | N/10 mm | - | - | - | - | - | - | - |
| Average reflectance in wavelength band of 400 to 700 nm | | % | 77 | 77 | 77 | 77 | 82 | 91 | 92 |
| Average transmittance in wavelength band of 800 to 900 nm | | % | 35 | 35 | 35 | 35 | 62 | 73 | 81 |
| Warpage during drying step | | - | C | C | A | A | A | A | A |
| Molding followability during molding processing | | - | A | A | A | A | A | A | A |
| Washout during molding processing | | - | B | B | B | B | B | B | B |
| Lightness of molded processed product | | - | B | B | B | B | A | A | A |
| Coloring of molded processed product | | - | B | B | A | B | B | B | B |
| Unevenness of metallic tone in molded processed product | | - | A | A | A | A | A | A | A |

[Table 2-1]

| | Unit | Example 15 | Example 16 | Example 17 | Example 18 | Example 19 | Example 20 | Example 21 |
|---|---|---|---|---|---|---|---|---|
| Thermoplastic resin A (A layer) | - | A-2 | A-2 | A-2 | A-1 | A-1 | A-1 | A-1 |
| Thermoplastic resin B (B layer) | - | B-1 | B-1 | B-1 | B-1 | B-1 | B-1 | B-1 |
| Number of laminate layers of A layer and B layer | - | 901 | 901 | 901 | 1802 | 1802 | 1802 | 1802 |
| Number of layers with a layer-pair thickness of 250 nm or more and less than 300 nm | - | 10 | 10 | 10 | 20 | 20 | 20 | 20 |
| Number of layers with a layer-pair thickness of 100 nm or more and less than 250 nm | - | 832 | 832 | 832 | 1664 | 1664 | 1664 | 1664 |
| Polyester film — Thickness (Tp) | μm | 92 | 92 | 92 | 199 | 199 | 199 | 199 |
| 50% tensile stress under 150°C (Fp) | MPa | 42 | 42 | 42 | 33 | 33 | 33 | 33 |
| Glass transition temperature (Tg (P)) | °C | 197 | 147 | 147 | 105 | 105 | 105 | 105 |
| In-plane refractive index of A layer | - | 1.611 | 1.611 | 1.611 | 1.579 | 1.579 | 1.579 | 1.579 |
| In-plane refractive index of a layer | - | 1.529 | 1.529 | 1.529 | 1.529 | 1.529 | 1.529 | 1.529 |
| Difference in in-plane refractive index between A layer and B layer | - | 0.082 | 0.082 | 0.082 | 0.050 | 0.050 | 0.050 | 0.050 |

24

(continued)

| | | Unit | Example 15 | Example 16 | Example 17 | Example 18 | Example 19 | Example 20 | Example 21 |
|---|---|---|---|---|---|---|---|---|---|
| X1 layer | Type of resin | - | PC1 | PC1 | PC 1 | PC1 | PC2 | PC3 | PC4 |
| | Thickness (Tx1) | μm | 250 | 250 | 250 | 250 | 250 | 250 | 250 |
| | 50% tensile stress under 150°C (Fx1) | MPa | 3.1 | 3.1 | 3.1 | 3.1 | 3.9 | 9.5 | 5.1 |
| | Glass transition temperature (Tg (X1)) | μm | 145 | 145 | 145 | 145 | 153 | 159 | 162 |
| | Tx1 × Fp | m Pa | 10500 | 10500 | 10500 | 8250 | 8250 | 8250 | 8250 |
| | Tp × Fx1 | m Pa | 285 | 285 | 285 | 601 | 757 | 873 | 989 |
| | Tg (X1) - Tg (P) | °C | -2 | -2 | -2 | 40 | 48 | 54 | 57 |
| | Thickness of adhesive layer | μm | 3 | No adhesive layer | No adhesive layer | No adhesive layer | No adhesive layer | No adhesive layer | No adhesive layer |
| | Adhesion strength to polyester film (When the X1 layer and the polyester film are in contact with each other) | N/10 mm | - | 1.3 | 4.1 | 4.1 | 4.1 | 4 . 1 | 9.1 |
| X2 layer | Type of resin | - | PMMA | No X2 layer | PC 1 | PC1 | PC2 | PC3 | PC4 |
| | Thickness (Tx2) | μm | 125 | - | 125 | 125 | 125 | 125 | 125 |
| | 50% tensile stress under 150°C (Fx2) | MPa | 0.2 | - | 3.1 | 3.1 | 3.9 | 4.5 | 5.1 |
| | Glass transition temperature (Tg (X2)) | μm | 98 | - | 145 | 145 | 145 | 145 | 145 |
| | Tx2 × Fp | m Pa | 5250 | - | 5250 | 9125 | 9125 | 4125 | 4125 |
| | Tp × Fx2 | m Pa | 18 | - | 285 | 601 | 757 | 873 | 989 |
| | Tg (X2) - Tg (P) | °C | -99 | - | -2 | 40 | 40 | 40 | 40 |
| | Thickness of adhesive layer | μm | 3 | - | No adhesive layer | No adhesive layer | No adhesive layer | No adhesive layer | No adhesive layer |
| | Adhesion strength to polyester film (When the X2 layer and the polyester film are in contact with each other) | N/10 mm | - | - | 4.1 | 9.1 | 9.1 | 4 . 1 | 9.1 |
| Average reflectance in wavelength band of 400 to 700 nm | | % | 91 | 91 | 91 | 89 | 89 | 89 | 89 |

EP 4 299 313 A1

(continued)

| | Unit | Example 15 | Example 16 | Example 17 | Example 18 | Example 19 | Example 20 | Example 21 |
|---|---|---|---|---|---|---|---|---|
| Average transmittance in wavelength band of 800 to 900 nm | % | 81 | 81 | 81 | 81 | 81 | 81 | 81 |
| Warpage during drying step | - | A | C | A | A | A | A | A |
| Molding followability during molding processing | - | A | A | A | A | A | A | A |
| Washout during molding processing | - | B | B | B | B | A | A | A |
| Lightness of molded processed product | - | A | A | A | A | A | A | A |
| Coloring of molded processed product | - | B | B | B | A | A | A | A |
| Unevenness of metallic tone in molded processed product | - | A | A | A | A | A | A | A |

[Table 2-2]

| | | Unit | Example 22 | Example 23 | Example 29 | Comparative Example 1 | Comparative Example 2 | Comparative Example 3 |
|---|---|---|---|---|---|---|---|---|
| Polyester film | Thermoplastic resin A (A layer) | - | A-1 | A-1 | A-1 | A-1 | A-2 | Indium vapor deposition film |
| | Thermoplastic resin B (B layer) | - | B-1 | B-1 | B-1 | B-5 | B-1 | |
| | Number of laminate layers of A layer and B layer | - | 55 | 225 | 951 | 901 | 901 | |
| | Number of layers with a layer-pair thickness of 250 nm or more and less than 300 nm | - | 12 | 22 | 95 | 290 | 10 | 0 |
| | Number of layers with a layer-pair thickness of 100 nm or more and less than 250 nm | - | 34 | 198 | 901 | 602 | 832 | 0 |
| | Thickness (Tp) | μm | 23 | 39 | 70 | 117 | 92 | 125 |
| | 50% tensile stress under 150°C (Fp) | MPa | 39 | 37 | 35 | 35 | 42 | 71 |
| | Glass transition temperature (Tg (P)) | °C | 105 | 105 | 105 | 105 | 147 | 105 |
| | In-plane refractive index of A layer | - | 1.579 | 1.579 | 1.579 | 1.579 | 1.611 | - |
| | In-plane refractive index of B layer | - | 1.529 | 1.529 | 1.529 | 1.577 | 1.529 | - |
| | Difference in in-plane refractive index between A layer and B layer | - | 0.050 | 0.050 | 0.050 | 0.002 | 0.082 | - |

| | | Unit | Example 22 | Example 23 | Example 29 | Comparative Example 1 | Comparative Example 2 | Comparative Example 3 |
|---|---|---|---|---|---|---|---|---|
| X1 layer | Type of resin | - | PC4 | PC 4 | PC4 | No X1 layer | No X1 layer | PC1 |
| | Thickness (Tx1) | μm | 250 | 250 | 250 | - | - | 250 |
| | 50% tensile stress under 150°C (Fx1) | MPa | 5.1 | 5.1 | 5.1 | - | - | 3.1 |
| | Glass transition temperature (Tg (X1)) | μm | 162 | 162 | 162 | - | - | 145 |
| | Tx1 × Fp | m·Pa | 9750 | 9250 | 8750 | - | - | 17750 |
| | Tp × Fx1 | m·Pa | 117 | 199 | 357 | - | - | 388 |
| | Tg (X1) - Tg (P) | °C | 57 | 57 | 57 | - | - | 40 |
| | Thickness of adhesive layer | μm | No adhesive layer: | No adhesive layer: | No adhesive layer | - | - | 3 |
| | Adhesion strength to polyester film (When the X1 layer and the polyester film are in contact with each other) | N/10 mm | 4.1 | 4.1 | 4 .1 | - | - | - |
| X2 layer | Type of resin | - | PC4 | PC 4 | PC4 | No X2 layer | No X2 layer | PMMA |
| | Thickness (Tx2) | μm | 125 | 125 | 125 | - | - | 125 |
| | 50% tensile stress under 150°C (Fx2) | MPa | 5.1 | 5.1 | 5.1 | - | - | 0.2 |
| | Glass transition temperature (Tg (X2)) | μm | 145 | 145 | 145 | - | - | 98 |
| | Tx2 × Fp | m·Pa | 9875 | 9625 | 4375 | - | - | 8875 |
| | Tp × Fx2 | m·Pa | 117 | 199 | 357 | - | - | 25 |
| | Tg (X2) - Tg (P) | °C | 40 | 40 | 40 | - | - | -7 |
| | Thickness of adhesive layer | μm | No adhesive layer: | No adhesive layer: | No adhesive layer | - | - | 3 |
| | Adhesion strength to polyester film (When the X2 layer and the polyester film are in contact with each other) | N/10 mm | 4.1 | 4.1 | 4.1 | - | - | - |
| Average reflectance in wavelength band of 400 to 700 nm | | % | 26 | 51 | 62 | 32 | 91 | 64 |
| Average transmittance in wavelength band of 800 to 900 nm | | % | 81 | 53 | 39 | 79 | 81 | 5 |

EP 4 299 313 A1

(continued)

| | Unit | Example 22 | Example 23 | Example 29 | Comparative Example 1 | Comparative Example 2 | Comparative Example 3 |
|---|---|---|---|---|---|---|---|
| Warpage during drying step | - | A | A | A | A | A | A |
| Molding followability during molding processing | - | A | A | A | B | C | B |
| Washout during molding processing | - | A | A | A | D | - | B |
| Lightness of molded processed product | - | C | B | B | D | A | C |
| Coloring of molded processed product | - | C | A | A | D | - | A |
| Unevenness of metallic tone in molded processed product | - | B | A | A | B | B | B |

Each of the polyester films of Examples and Comparative Examples 1 and 2 includes three or more thick film layers in which the number of layers with a layer thickness of 100 nm or more and less than 200 nm is larger than the number of layers with a layer-pair thickness of 200 nm or more and less than 250 nm and the thickness is 1 $\mu$m or more and 20 um or less. The layer composition has been realized by adjusting the configuration of the feedblock by the method described in Japanese Patent Laid-open Publication No. 2007-176154.

INDUSTRIAL APPLICABILITY

According to the present invention, a molding film having excellent moldability during molding processing can be provided. In addition, according to a preferred aspect of the present invention, it is possible to provide a molding film that exhibits a metallic tone while having transparency to a sensor having an infrared wavelength, and can suppress coloring while achieving both molding followability and washout resistance at the time of molding, and therefore, the molding film can be suitably used for decoration of molded members such as building materials, automobile parts, mobile phones, electrical products, and game machine parts, for example.

DESCRIPTION OF REFERENCE SIGNS

1: Molding film
2: Polyester film
3: Resin layer (X layer)
4: Adhesive layer

**Claims**

1. A molding film comprising a resin layer (X layer) on at least one surface of a polyester film, wherein the polyester film comprises a composition in which a layer (A layer) containing a thermoplastic resin A as a main component and a layer (B layer) containing a thermoplastic resin B different from the thermoplastic resin A as a main component are alternately laminated in a thickness direction in a total of 51 or more layers.

2. The molding film according to claim 1, wherein a thickness Tx [um] of the X layer, a thickness Tp [um] of the polyester film, a 50% tensile stress Fx [MPa] of the X layer at 150°C, and a 50% tensile stress Fp [MPa] of the polyester film at 150°C satisfy the following formulas (1) and (2):

$$\text{formula (1)} \quad Tx \times Fp \leq 11000,$$

and

$$\text{formula (2)} \quad Tp \times Fx \geq 250.$$

3. The molding film according to claim 1 or 2, wherein a glass transition temperature Tg (X) of the X layer and a glass transition temperature Tg (P) of the polyester film satisfy the following formula (3):

$$\text{formula (3)} \quad Tg (X) \leq Tg (P) + 70.$$

4. The molding film according to any one of claims 1 to 3, wherein a glass transition temperature Tg (X) of the X layer and a glass transition temperature Tg (P) of the polyester film satisfy the following formula (4):

$$\text{formula (4)} \quad Tg (P) + 30 \leq Tg (X).$$

5. The molding film according to any one of claims 1 to 4, wherein the X layer contains at least one of a polycarbonate resin, an acrylic resin, an acrylonitrile butadiene styrene resin, and a polystyrene resin as a main component.

6.  The molding film according to any one of claims 1 to 5, wherein the molding film has an average reflectance of 30% or more in a wavelength band of 400 to 700 nm.

7.  The molding film according to any one of claims 1 to 6, comprising the X layers on both surfaces of the polyester film.

8.  The molding film according to any one of claims 1 to 7, wherein an average transmittance in a wavelength band of 800 to 900 nm is 70% or more.

9.  The molding film according to any one of claims 1 to 8, wherein the thermoplastic resin A is a crystalline resin.

10. The molding film according to any one of claims 1 to 9, wherein the X layer is in contact with the polyester film, and has an adhesion strength of 1.0 N/10 mm or more.

11. The molding film according to any one of claims 1 to 10, comprising an adhesive layer between the X layer and the polyester film.

12. A molded body comprising the molding film according to any one of claims 1 to 11.

13. The molded body according to claim 12, wherein an insert resin, a coloring layer, and the molding film are laminated in this order, and the X layer of the molding film and the coloring layer are adjacent to each other.

Fig.1

Fig.2

Fig.3

Fig.4

Fig.5

## INTERNATIONAL SEARCH REPORT

International application No.

**PCT/JP2022/007127**

### A. CLASSIFICATION OF SUBJECT MATTER

***B32B 27/36***(2006.01)i; ***B32B 7/023***(2019.01)i
FI: B32B7/023; B32B27/36

According to International Patent Classification (IPC) or to both national classification and IPC

### B. FIELDS SEARCHED

Minimum documentation searched (classification system followed by classification symbols)

B32B1/00 - 43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-255602 A (TORAY INDUSTRIES, INC.) 22 December 2011 (2011-12-22) claims, paragraphs [0015], [0028], [0034], [0043], examples | 1-13 |
| X | JP 2018-089857 A (SUMITOMO BAKELITE CO., LTD.) 14 June 2018 (2018-06-14) claims, paragraphs [0043], [0044], [0050], examples | 1-13 |
| A | JP 2019-061241 A (TORAY INDUSTRIES, INC.) 18 April 2019 (2019-04-18) paragraph [0146] | 1-13 |
| A | JP 2006-216493 A (POLYMATECH CO., LTD.) 17 August 2006 (2006-08-17) entire text | 1-13 |
| A | JP 2019-014836 A (TORAY INDUSTRIES, INC.) 31 January 2019 (2019-01-31) entire text | 1-13 |
| A | WO 2013/080987 A1 (TEIJIN DUPONT FILMS JAPAN LTD.) 06 June 2013 (2013-06-06) entire text | 1-13 |
| A | JP 2020-192812 A (TORAY INDUSTRIES, INC.) 03 December 2020 (2020-12-03) entire text | 1-13 |

☑ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/007127** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-219774 A (KONICA MINOLTA INC.) 14 December 2017 (2017-12-14)<br>entire text | 1-13 |
| A | JP 2000-309181 A (TOPPAN PRINTING CO., LTD.) 07 November 2000 (2000-11-07)<br>entire text | 1-13 |
| A | JP 2019-155621 A (TORAY INDUSTRIES, INC.) 19 September 2019 (2019-09-19)<br>entire text | 1-13 |
| A | JP 2004-503402 A (3M INNOVATIVE PROPERTIES CO.) 05 February 2004 (2004-02-05)<br>entire text | 1-13 |
| A | JP 2008-132611 A (TEIJIN DUPONT FILMS JAPAN LTD.) 12 June 2008 (2008-06-12)<br>entire text | 1-13 |
| A | JP 2010-265160 A (CENTRAL GLASS CO., LTD.) 25 November 2010 (2010-11-25)<br>entire text | 1-13 |
| A | JP 2014-223794 A (TORAY INDUSTRIES, INC.) 04 December 2014 (2014-12-04)<br>entire text | 1-13 |
| A | JP 2018-106054 A (3M INNOVATIVE PROPERTIES CO.) 05 July 2018 (2018-07-05)<br>entire text | 1-13 |
| A | WO 2020/054529 A1 (TORAY INDUSTRIES, INC.) 19 March 2020 (2020-03-19)<br>entire text | 1-13 |
| A | CN 111522090 A (LI, Mingwei) 11 August 2020 (2020-08-11)<br>entire text | 1-13 |
| A | CN 111531998 A (WANG, Luo) 14 August 2020 (2020-08-14)<br>entire text | 1-13 |

Form PCT/ISA/210 (second sheet) (January 2015)

## INTERNATIONAL SEARCH REPORT
### Information on patent family members

International application No.

**PCT/JP2022/007127**

| Patent document cited in search report | | | Publication date (day/month/year) | Patent family member(s) | | | Publication date (day/month/year) |
|---|---|---|---|---|---|---|---|
| JP | 2011-255602 | A | 22 December 2011 | (Family: none) | | | |
| JP | 2018-089857 | A | 14 June 2018 | (Family: none) | | | |
| JP | 2019-061241 | A | 18 April 2019 | (Family: none) | | | |
| JP | 2006-216493 | A | 17 August 2006 | (Family: none) | | | |
| JP | 2019-014836 | A | 31 January 2019 | (Family: none) | | | |
| WO | 2013/080987 | A1 | 06 June 2013 | US entire text | 2014/0327958 | A1 | |
| | | | | EP entire text | 2786865 | A1 | |
| JP | 2020-192812 | A | 03 December 2020 | WO entire text | 2016/080342 | A1 | |
| | | | | TW entire text | 201627144 | A | |
| | | | | CN entire text | 107003458 | A | |
| | | | | KR entire text | 10-2017-0088331 | A | |
| JP | 2017-219774 | A | 14 December 2017 | (Family: none) | | | |
| JP | 2000-309181 | A | 07 November 2000 | (Family: none) | | | |
| JP | 2019-155621 | A | 19 September 2019 | (Family: none) | | | |
| JP | 2004-503402 | A | 05 February 2004 | US entire text | 6797396 | B1 | |
| | | | | WO entire text | 2001/096104 | A2 | |
| JP | 2008-132611 | A | 12 June 2008 | (Family: none) | | | |
| JP | 2010-265160 | A | 25 November 2010 | WO entire text | 2010/119771 | A1 | |
| JP | 2014-223794 | A | 04 December 2014 | (Family: none) | | | |
| JP | 2018-106054 | A | 05 July 2018 | (Family: none) | | | |
| WO | 2020/054529 | A1 | 19 March 2020 | CN entire text | 112639546 | A | |
| | | | | KR entire text | 10-2021-0055684 | A | |
| | | | | TW entire text | 202021805 | A | |
| CN | 111522090 | A | 11 August 2020 | (Family: none) | | | |
| CN | 111531998 | A | 14 August 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012201032 A
- JP 2019139228 A
- JP 2018069552 A
- JP 2007176154 A

**Non-patent literature cited in the description**

- **JIRO YAMAUCHI.** Numerical Computation Method for Electronic Calculators I. Baifukan, 1965